# EUROPEAN PATENT SPECIFICATION

(11) **EP 3 690 279 B1**
(45) Date of publication and mention of the grant of the patent: **21.12.2022**
(21) Application number: 18859181.2
(22) Date of filing: 31.07.2018
(51) Int. Cl.: F16H 1/10, B60B 35/14, B60B 35/18, B60K 17/14, F16C 19/18, F16H 3/66, F16H 3/72

(54) **SPEED REDUCER**
DREHZAHLMINDERER
RÉDUCTEUR DE VITESSE

(30) Priority: 25.09.2017 JP 2017183182
(43) Date of publication of application: 05.08.2020
(73) Proprietor: NSK Ltd., Tokyo 141-8560 (JP)
(72) Inventor: KISHIDA, Hirotaka, Fujisawa-shi Kanagawa 251-8501 (JP); DAIKOKU, Yuya, Fujisawa-shi Kanagawa 251-8501 (JP); MATSUDA, Yasuyuki, Fujisawa-shi Kanagawa 251-8501 (JP)
(74) Representative: SSM Sandmair
(86) International application number: PCT/JP2018/028617
(87) International publication number: WO 2019/058766

(56) References cited:
- DE-A1- 1 550 889
- GB-A- 393 498
- JP-A- 2016 070 358
- JP-A- 2016 070 358
- JP-U- S5 712 318
- US-A- 1 604 401
- US-A- 1 604 401
- US-A- 1 999 267

## Description

### Field

The present invention relates to a reduction gear.

### Background

A vehicle includes a hub bearing that rotatably supports a wheel. In an electric vehicle, for example, as a driving device for rotating the wheel, a motor may be provided near the hub bearing. Such a motor is called "in-wheel motor". In order to amplify torque generated in the motor, a reduction gear may be provided to the hub bearing. For example, Patent Literature 1 describes a reduction gear including an internal gear and a pinion gear. In Patent Literature 1, a bearing that supports the pinion gear is integrated with an outer ring of a bearing that supports the internal gear.

### Citation List

### Patent Literature

Patent Literature 1: Japanese Laid-open Patent Publication No. 2017-105416 A
GB 393 498 A discloses that in reduction gearing between the crank shaft of an internal-combustion engine and an aircraft propeller shaft, wherein the crank shaft end comprises an outer tubular part, integral with the adjacent crank web, and an inner shaft member, the two members having a driving connection at their inner ends but being unconnected at their outer ends, the pinion of the reduction gear having a driving connection with the outer end of the member and being mounted freely upon the part, the bearing surface of the pinion is lubricated through passages and grooves from an annular space between the members, this space being in communication with the engine lubricating system. The gears are lubricated by oil passing through a passage and orifice in the member.
JP S57 12318 U also relates to the field of the present invention.

### Summary

### Technical Problem

Further increase of the reduction ratio of the reduction gear may be needed. In this case, if the internal gear is upsized, the reduction ratio of the reduction gear increases. However, if the internal gear in the reduction gear described in Patent Literature 1 is upsized, the size of the outer ring of the bearing that supports the internal gear also increases, and thus the weight of the reduction gear is more likely to increase. Thus, a reduction gear is desired that enables an increase in the reduction ratio and weighs lightly.

The present invention has been made in view of the above-described circumstances, and an object thereof is to provide a reduction gear that enables an increase in the reduction ratio and weighs lightly.

### Solution to Problem

To achieve the above object, A reduction gear according to the present invention includes a first bearing that is mounted on a supporting member, an output member that is supported by the first bearing and rotates about a first rotation axis, an internal gear that is coupled to the output member and rotates about the first rotation axis together with the output member, a second bearing that is mounted on the supporting member on an outer side relative to the first bearing in a radial direction, and a pinion gear that is supported by the second bearing, rotates about a second rotation axis different from the first rotation axis, and is engaged with the internal gear. At least a part of the second bearing is located on a side closer to the internal gear with respect to a plane passing through an end portion of the first bearing that is more distant from the internal gear in an axial direction parallel to the second rotation axis and being orthogonal to the second rotation axis.

With this configuration, the pinion gear is supported by the second bearing at a position closer to the internal gear. Thus, backlash in the pinion gear is reduced. Furthermore, the second bearing is a member that is separate from the first bearing, and is located on the outer side relative to the first bearing in the radial direction. Thus, increase in weight according to the distance between the pinion gear and the first bearing is suppressed in comparison to the case where the second bearing is mounted on a member that supports the outer ring of the first bearing. In other words, the weight of the reduction gear is less likely to increase even if the internal gear is upsized in order to increase the reduction ratio. Accordingly, the reduction gear of the present invention enables an increase in reduction ratio and weighs lightly.

As a desirable embodiment of the reduction gear, the second bearing is a double-row angular ball bearing.

With this configuration, the second bearing can bear an axial load, a radial load, and a moment load. This eliminates the need to arrange an additional bearing such as a radial needle bearing between a distal end of the pinion gear and the output member. Accordingly, the length of the reduction gear in the axial direction can be reduced.

According to the invention, the pinion gear includes a tubular outer shaft and an inner shaft at least a part of which is located on an inner side of the outer shaft and that rotates together with the outer shaft, the outer shaft has a small-diameter portion that is in contact with an inner circumferential surface of an inner ring of the second bearing and a large-diameter portion that is engaged with the internal gear, and the maximum outer diameter of the large-diameter portion is larger than the bore diameter of the inner ring.

In order to increase torque that the pinion gear can transmit, it is preferable that the large-diameter portion that is engaged with the internal gear be larger to a certain extent. Meanwhile, for weight reduction, it is preferable that the second bearing be smaller. However, if the pinion gear is formed of one member, the outer diameter of the large-diameter portion needs to be set smaller than the bore diameter of the second bearing, which makes it difficult to reduce the size of the second bearing while maintaining the outer diameter of the large-diameter portion. By contrast, the pinion gear of the embodiment includes the outer shaft and the inner shaft, and thus the outer diameter of the large-diameter portion can be set larger than the bore diameter of the second bearing. Accordingly, the reduction gear of the embodiment can achieve compatibility between increase in torque that can be transmitted and weight reduction.

According to the invention, the inner shaft has a base portion located on an inner side of the small-diameter portion and a torque transmitting portion located on an inner side of the large-diameter portion, the base portion has a first fitting surface that is a cylindrical outer circumferential surface, the small-diameter portion has a second fitting surface that is a cylindrical inner circumferential surface and is in contact with the first fitting surface, one of an outer circumferential surface of the torque transmitting portion and an inner circumferential surface of the large-diameter portion has a groove that extends in the axial direction, and the other of the outer circumferential surface of the torque transmitting portion and the inner circumferential surface of the large-diameter portion has a projection that extends in the axial direction and fits into the groove.

With this configuration, the first fitting surface and the second fitting surface that are located on an inner side of the second bearing are in contact with each other, so that misalignment between the second bearing and the pinion gear is prevented. In other words, misalignment of the rotation axis of the pinion gear with respect to the rotation axis of the second bearing is prevented. With the groove and the projection, torque is transmitted from the inner shaft to the outer shaft at a position overlapping the internal gear. Thus, the length of the reduction gear in the axial direction is shorter than the length thereof in the case when the torque is transmitted at another position (e.g., a position on a side opposite to the large-diameter portion with respect to the second bearing).

As a desirable embodiment of the reduction gear, the second rotation axis is located on an inner side of the internal gear in a radial direction.

As a desirable embodiment of the reduction gear, the first bearing is mounted on the supporting member with an attachment interposed therebetween, the first bearing includes a plurality of first rolling elements that are arranged in a first row and a plurality of second rolling elements that are arranged in a second row, and inner circumferential surfaces of the attachment are in contact with the first rolling elements and the second rolling elements.

With this configuration, the number of parts of the first bearing can be reduced because the first bearing does not include the outer ring. Thus, the reduction gear of the present invention can be configured to be light in weight.

### Advantageous Effects of Invention

According to the present invention, the reduction gear that enables backlash in the pinion gear to be reduced and the weight of which is light can be provided.

### Brief Description of Drawings

FIG. 1 is a schematic view of an electric vehicle driving device according to an embodiment.
FIG. 2 is a schematic view illustrating a path through which torque is transmitted in a low gear mode.
FIG. 3 is a schematic view illustrating a path through which torque is transmitted in a high gear mode.
FIG. 4 is a perspective view of a wheel on which the electric vehicle driving device in the embodiment is mounted.
FIG. 5 is a perspective view of the wheel on which the electric vehicle driving device in the embodiment is mounted.
FIG. 6 is a perspective view of the electric vehicle driving device in the embodiment.
FIG. 7 is a perspective view of the electric vehicle driving device in the embodiment.
FIG. 8 is a front view of the electric vehicle driving device in the embodiment.
FIG. 9 is a front view of the electric vehicle driving device in the embodiment.
FIG. 10 is a rear view of the electric vehicle driving device in the embodiment.
FIG. 11 is a cross-sectional view along line A-A in FIG. 9.
FIG. 12 is a cross-sectional view along line B-B in FIG. 10.
FIG. 13 is a cross-sectional view along line C-C in FIG. 10.
FIG. 14 is a front view of a first motor, a first reduction gear, a second motor, a second reduction gear, and a transmission device in the embodiment.
FIG. 15 is a perspective view of the first motor, the first reduction gear, the second motor, the second reduction gear, and the transmission device in the embodiment.
FIG. 16 is a rear view of the transmission device.
FIG. 17 is a cross-sectional view along line D-D in FIG. 16.
FIG. 18 is a front view of a third reduction gear.
FIG. 19 is a cross-sectional view along line E-E in FIG. 18.
FIG. 20 is an enlarged view of the vicinity of a fourth pinion gear.
FIG. 21 is a perspective view of a second ring gear, the fourth pinion gear, and a second bearing.
FIG. 22 is a perspective view of the second ring gear, the fourth pinion gear, and the second bearing.
FIG. 23 is a cross-sectional view of an electric vehicle driving device according to a first modification.
FIG. 24 is a cross-sectional view of a third reduction gear according to a second modification.
FIG. 25 is a cross-sectional view of a third reduction gear according to a third modification.
FIG. 26 is a cross-sectional view of a third reduction gear according to a fourth modification.
FIG. 27 is a cross-sectional view of a third reduction gear according to a fifth modification.
FIG. 28 is a cross-sectional view of a third reduction gear according to a sixth modification.
FIG. 29 is a cross-sectional view of a third reduction gear according to a seventh modification.

### Description of Embodiments

Hereinafter, the present invention will be described in detail with reference to the drawings. It should be noted that the present invention is not limited by the following modes for carrying out the invention (hereinafter, referred to as embodiments). Components in the following embodiments include components that those skilled in the art can easily suppose and substantially the same components being components in a what-is-called equivalent range. Furthermore, the components that are disclosed in the following embodiments can be appropriately combined.

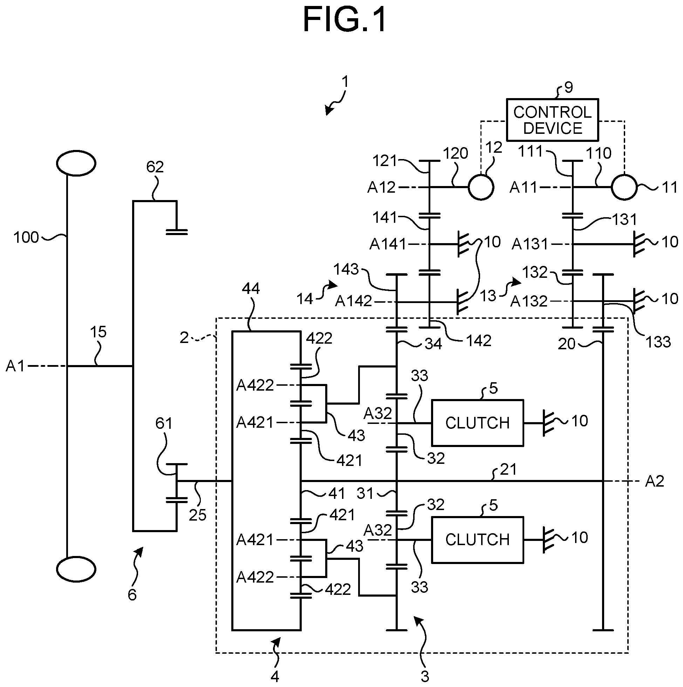

FIG. 1 is a schematic view of an electric vehicle driving device according to the embodiment. An electric vehicle driving device 1 is a device for rotating a wheel 100 of a vehicle, for example. As illustrated in FIG. 1, the electric vehicle driving device 1 includes a case 10, a first motor 11, a first reduction gear 13, a second motor 12, a second reduction gear 14, a transmission device 2, a third reduction gear 6, an output member 15, and a control device 9.

The first motor 11 is connected to the transmission device 2 with the first reduction gear 13 interposed therebetween. The first reduction gear 13 increases torque that the first motor 11 outputs and transmits it to the transmission device 2. The first reduction gear 13, for example, doubles the torque that the first motor 11 outputs and transmits it to the transmission device 2. Maximum torque of the first motor 11 is, for example, 25 (Nm). Maximum torque that is transmitted to the transmission device 2 from the first reduction gear 13 is therefore 50 (Nm).

The first reduction gear 13 includes a first gear 131, a second gear 132, and a third gear 133. A first motor gear 111 mounted on a first shaft 110 of the first motor 11 is engaged with the first gear 131. The first gear 131 is engaged with the second gear 132. The third gear 133 is a gear coaxial with the second gear 132 and rotates together with the second gear 132. The third gear 133 is engaged with an input gear 20 of the transmission device 2.

The second motor 12 is connected to the transmission device 2 with the second reduction gear 14 interposed therebetween. The second reduction gear 14 increases torque that the second motor 12 outputs and transmits it to the transmission device 2. The second reduction gear 14, for example, doubles the torque that the second motor 12 outputs and transmits it to the transmission device 2. Maximum torque of the second motor 12 is, for example, 25 (Nm). Maximum torque that is transmitted to the transmission device 2 from the second reduction gear 14 is therefore 50 (Nm).

The second reduction gear 14 includes a first gear 141, a second gear 142, and a third gear 143. A second motor gear 121 mounted on a second shaft 120 of the second motor 12 is engaged with the first gear 141. The first gear 141 is engaged with the second gear 142. The third gear 143 is a gear coaxial with the second gear 142 and rotates together with the second gear 142. The third gear 143 is engaged with a first ring gear 34 of the transmission device 2. The first ring gear 34 has teeth on both of an outer circumferential surface and an inner circumferential surface. That is to say, the first ring gear 34 is an external gear and an internal gear. The third gear 143 is engaged with the teeth on the outer circumferential surface of the first ring gear 34. In other words, the third gear 143 is engaged with the first ring gear 34 as the external gear.

As illustrated in FIG. 1, the transmission device 2 includes the input gear 20, a sun gear shaft 21, a first planetary gear device 3, a second planetary gear device 4, a clutch 5, and a transmission device output shaft 25. The transmission device 2 can change a reduction ratio (ratio of torque that the transmission device 2 outputs relative to torque that is input to the transmission device 2).

The input gear 20 receives torque from the third gear 133 of the first reduction gear 13. The sun gear shaft 21 is coupled to the input gear 20. When the first motor 11 is driven, the input gear 20 and the sun gear shaft 21 rotate about a rotation axis A2.

The first planetary gear device 3 is, for example, a single pinion-type planetary gear device. The first planetary gear device 3 includes a first sun gear 31, first pinion gears 32, a first carrier 33, and the first ring gear 34.

The first sun gear 31 is coupled to the sun gear shaft 21. The first sun gear 31 rotates about the rotation axis A2 together with the sun gear shaft 21. The first sun gear 31 is engaged with the first pinion gears 32. The number of teeth of the first sun gear 31 is, for example, 24. The number of teeth of the first pinion gears 32 is, for example, 25.

The first carrier 33 is supported on the case 10 with the clutch 5 interposed therebetween. The first carrier 33 supports the first pinion gears 32 such that the first pinion gears 32 can rotate about rotating axes A32. The rotating axes A32 are arranged in parallel to the rotation axis A2. The first carrier 33 supports the first pinion gears 32 such that the first pinion gears 32 can revolve about the rotation axis A2. The first pinion gears 32 are engaged with the teeth on the inner circumferential surface of the first ring gear 34. In other words, the first pinion gears 32 are engaged with the first ring gear 34 as the internal gear. The first ring gear 34 rotates about the rotation axis A2. The number of teeth of the first ring gear 34 is, for example, 76.

The clutch 5 is, for example, a one-way clutch. The clutch 5 transmits only torque in a first direction and does not transmit torque in a second direction as an opposite direction to the first direction. The clutch 5 is arranged between the case 10 and the first carrier 33. The clutch 5 can restrict rotation of the first carrier 33. To be specific, the clutch 5 can switch between an engaged state restricting revolution of the first carrier 33 and a separated state permitting the revolution of the first carrier 33. That is to say, the clutch 5 enables the first carrier 33 to be rotatable in a specific direction relative to the case 10 and enables the first carrier 33 to be non-rotatable in a direction opposite to the specific direction relative to the case 10.

The second planetary gear device 4 is, for example, a double pinion-type planetary gear device. The second planetary gear device 4 includes a second sun gear 41, second pinion gears 421, third pinion gears 422, a second carrier 43, and a second ring gear 44.

The second sun gear 41 is coupled to the sun gear shaft 21. The second sun gear 41 rotates about the rotation axis A2 together with the sun gear shaft 21. The second pinion gears 421 are engaged with the second sun gear 41. The third pinion gears 422 are engaged with the second pinion gears 421. The number of teeth of the second sun gear 41 is, for example, 47. The number of teeth of the second pinion gears 421 is, for example, 20. The number of teeth of the third pinion gears 422 is, for example, 19.

The second carrier 43 is coupled to the first ring gear 34. The second carrier 43 supports the second pinion gears 421 such that the second pinion gears 421 can rotate about rotating axes A421. The second carrier 43 supports the third pinion gears 422 such that the third pinion gears 422 can rotate about rotating axes A422. The rotating axes A421 and the rotating axes A422 are arranged in parallel to the rotation axis A2. The second carrier 43 supports the second pinion gears 421 and the third pinion gears 422 such that the second pinion gears 421 and the third pinion gears 422 can revolve about the rotation axis A2. The second ring gear 44 is engaged with the third pinion gears 422. The second ring gear 44 rotates about the rotation axis A2. The second ring gear 44 is coupled to the transmission device output shaft 25. The number of teeth of the second ring gear 44 is, for example, 97.

The third reduction gear 6 is arranged between the transmission device 2 and the wheel 100 of the vehicle. The third reduction gear 6 is a final reduction gear. The third reduction gear 6 increases the torque that is input to the transmission device output shaft 25 and outputs it to the output member 15. The third reduction gear 6 includes a fourth pinion gear 61 and a third ring gear 62. The fourth pinion gear 61 is coupled to the transmission device output shaft 25 and rotates about the rotation axis A2 together with the transmission device output shaft 25. The fourth pinion gear 61 is engaged with the third ring gear 62. The third ring gear 62 rotates about a rotation axis A1. The third ring gear 62 is coupled to the output member 15. The output member 15 is coupled to the wheel 100. The output member 15 and the wheel 100 rotate about the rotation axis A1 together with the third ring gear 62. A rotation axis A11 of the first motor 11, a rotation axis A12 of the second motor 12, and the rotation axis A2 of the transmission device 2 are arranged in parallel to the rotation axis A1 of the output member 15.

Power generated in at least one of the first motor 11 and the second motor 12 is transmitted to the wheel 100 through the transmission device 2 and the third reduction gear 6. When the vehicle travels on a downward slope or the like, power generated in the wheel 100 is transmitted to at least one of the first motor 11 and the second motor 12 through the third reduction gear 6 and the transmission device 2. In this case, at least one of the first motor 11 and the second motor 12 is driven as a power generator. Rotation resistance in power generation acts on the vehicle as a regenerative brake.

The control device 9 is a computer and includes, for example, a central processing unit (CPU), a read only memory (ROM), a random access memory (RAM), an input interface, and an output interface. The control device 9 is, for example, an electronic control unit (ECU) mounted on the vehicle. The control device 9 controls the angular velocities and rotating directions of the first motor 11 and the second motor 12.

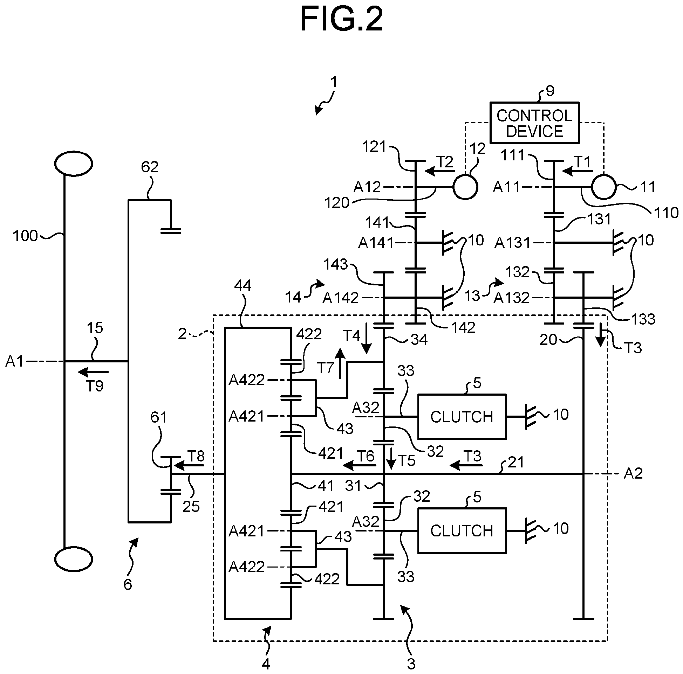

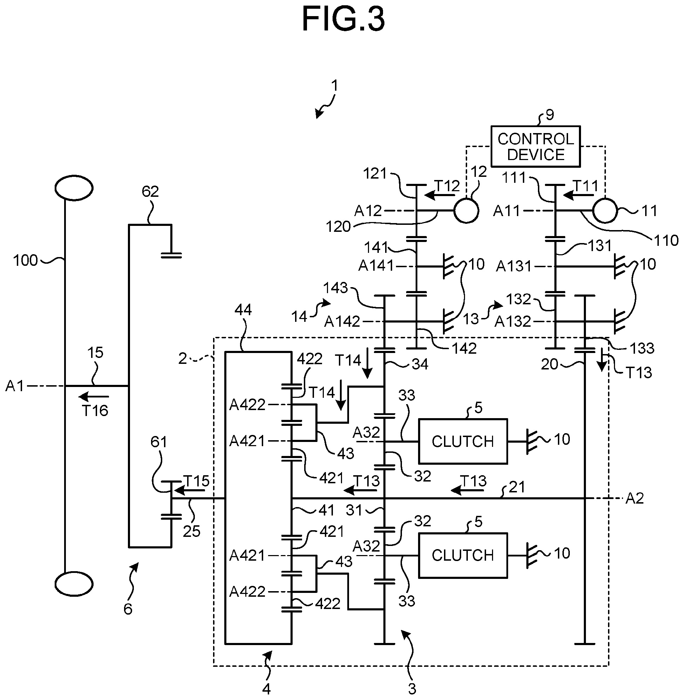

FIG. 2 is a schematic view illustrating a path through which torque is transmitted in a low gear mode. FIG. 3 is a schematic view illustrating a path through which torque is transmitted in a high gear mode. The electric vehicle driving device 1 has the low gear mode and the high gear mode as driving modes. The driving mode is switched in accordance with the angular velocities of the first motor 11 and the second motor 12. That is to say, when the first motor 11 and the second motor 12 are controlled such that torque in the first direction is applied to the first carrier 33, the clutch 5 is made into the engaged state and the drive mode is made into the low gear mode. When the first motor 11 and the second motor 12 are controlled such that torque in the second direction is applied to the first carrier 33, the clutch 5 is made into the separated state and the drive mode is made into the high gear mode.

The reduction ratio can be increased in the low gear mode. That is to say, the torque that is transmitted to the transmission device output shaft 25 is increased in the low gear mode. The low gear mode is used mainly when the vehicle needs large torque. The large torque is needed in, for example, climbing or acceleration.

The directions of the torques that are generated in the first motor 11 and the second motor 12 are opposite to each other in the low gear mode. The magnitudes of the torques that are generated in the first motor 11 and the second motor 12 may be the same as or differ from each other. The torque generated in the first motor 11 is input to the first sun gear 31 through the first reduction gear 13, the input gear 20, and the sun gear shaft 21. The torque generated in the second motor 12 is input to the first ring gear 34 through the second reduction gear 14. The clutch 5 is made into the engaged state in the low gear mode. That is to say, the first pinion gears 32 can rotate but cannot revolve in the low gear mode.

The torque that the first motor 11 outputs is assumed to be torque T1 and the torque that the second motor 12 outputs is assumed to be torque T2 in the low gear mode. The direction of the torque T2 is opposite to the direction of the torque T1. The torque T1 output from the first motor 11 becomes torque T3 when passing through the first reduction gear 13. The torque T3 is input to the first sun gear 31 through the sun gear shaft 21. The torque T3 becomes torque T6 when merging with the torque T5 in the first sun gear 31. The torque T5 is transmitted to the first sun gear 31 from the first ring gear 34.

The first sun gear 31 and the second sun gear 41 are coupled to each other with the sun gear shaft 21. The torque T6 output from the first sun gear 31 is transmitted to the second sun gear 41 through the sun gear shaft 21 in the low gear mode. The second planetary gear device 4 amplifies the torque T6. The second planetary gear device 4 distributes the torque T6 into torque T8 and torque T7. The torque T8 is torque of the torque T2 that has been distributed to the second ring gear 44 and is output from the transmission device output shaft 25. The torque T7 is torque of the torque T2 that has been distributed to the second carrier 43.

The torque T8 is output to the third reduction gear 6 from the transmission device output shaft 25. The third reduction gear 6 amplifies the torque T8 to turn it into torque T9. The torque T9 is output to the wheel 100 through the output member 15. As a result, the vehicle travels.

The second carrier 43 and the first ring gear 34 rotate integrally. The torque T7 distributed to the second carrier 43 is combined with the torque T4 output from the second reduction gear 14 in the first ring gear 34. The torque T4 and the torque T7 combined in the first ring gear 34 become the torque T5 through the first pinion gears 32. Thus, the transmission device 2 can increase the reduction ratio because the torque circulates between the first planetary gear device 3 and the second planetary gear device 4. That is to say, the electric vehicle driving device 1 can generate large torque in the low gear mode.

The reduction ratio can be decreased in the high gear mode. The torque that is transmitted to the transmission device output shaft 25 is decreased but friction loss of the transmission device 2 is decreased in the high gear mode. The directions of the torques that are generated in the first motor 11 and the second motor 12 are the same in the high gear mode. The magnitudes of the torques that are generated in the first motor 11 and the second motor 12 are substantially the same. The torque that the first motor 11 outputs is assumed to be torque T11 and the torque that the second motor 12 outputs is assumed to be torque T12 in the high gear mode. Torque T15 illustrated in FIG. 3 is torque that is output from the transmission device output shaft 25 and is transmitted to the third reduction gear 6.

The torque T11 of the first motor 11 becomes torque T13 when passing through the first reduction gear 13 in the high gear mode. The torque T12 of the second motor 12 becomes torque T14 when passing through the second reduction gear 14. The clutch 5 is made into the separated state in the high gear mode. That is to say, the first pinion gears 32 can rotate and revolve in the high gear mode. With the separated state of the clutch 5, the circulation of the torque between the first planetary gear device 3 and the second planetary gear device 4 is blocked in the high gear mode. The first carrier 33 can revolve in the high gear mode, so that the first sun gear 31 and the first ring gear 34 can rotate relatively freely. The torque T13 merges with the torque T14 in the second carrier 43. As a result, the torque T15 is transmitted to the second ring gear 44.

The torque T15 is output to the third reduction gear 6 from the transmission device output shaft 25. The third reduction gear 6 amplifies the torque T15 to turn it into torque T16. The torque T16 is output to the wheel 100 through the output member 15. As a result, the vehicle travels. In the high gear mode, the control device 9 appropriately controls the angular velocity of the first motor 11 and the angular velocity of the second motor 12, so that the direction of the torque T16 is reversed. As a result, the vehicle travels backward.

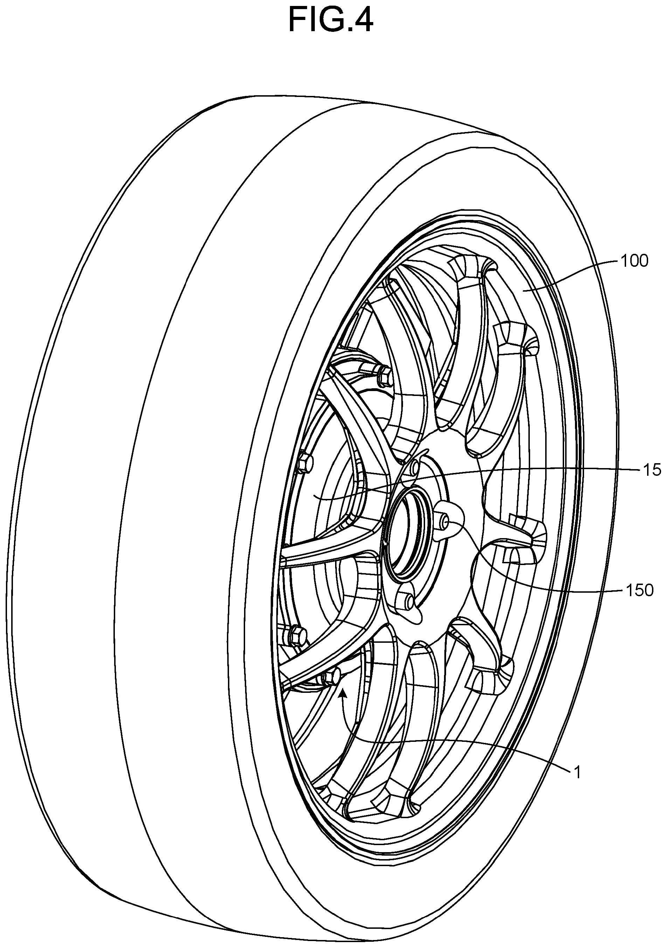

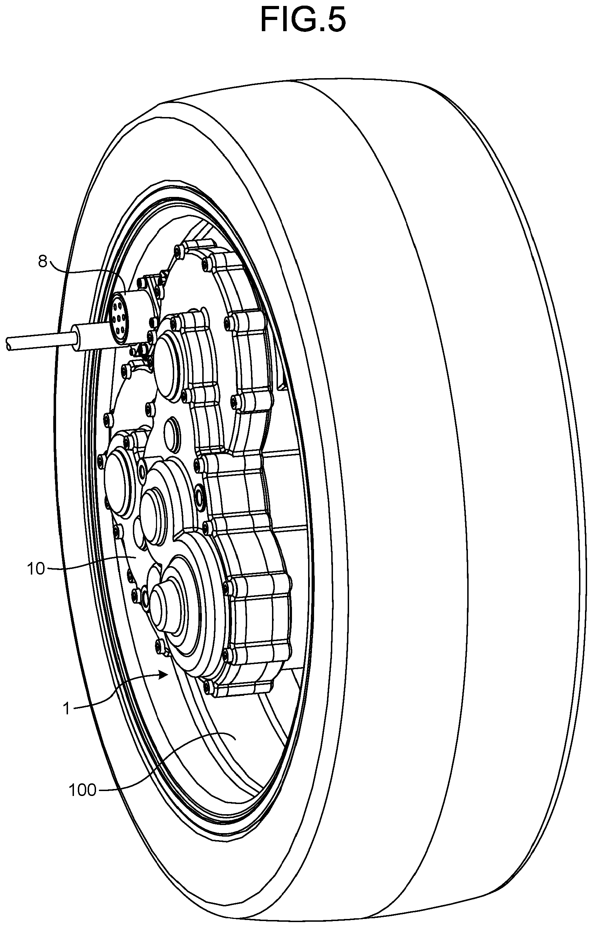

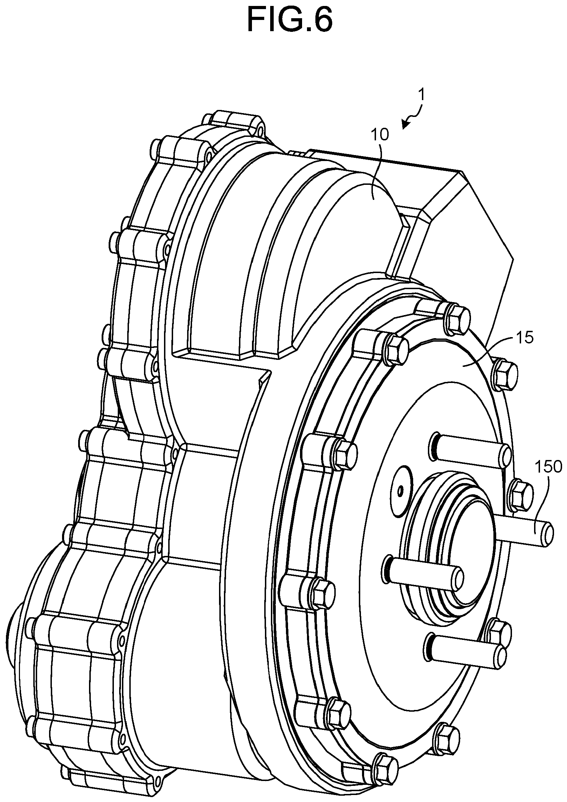

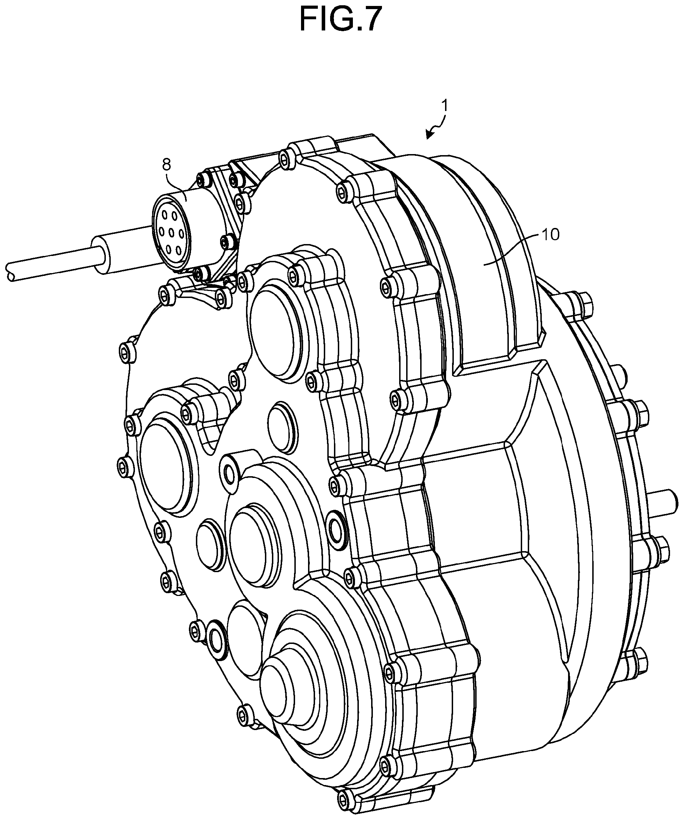

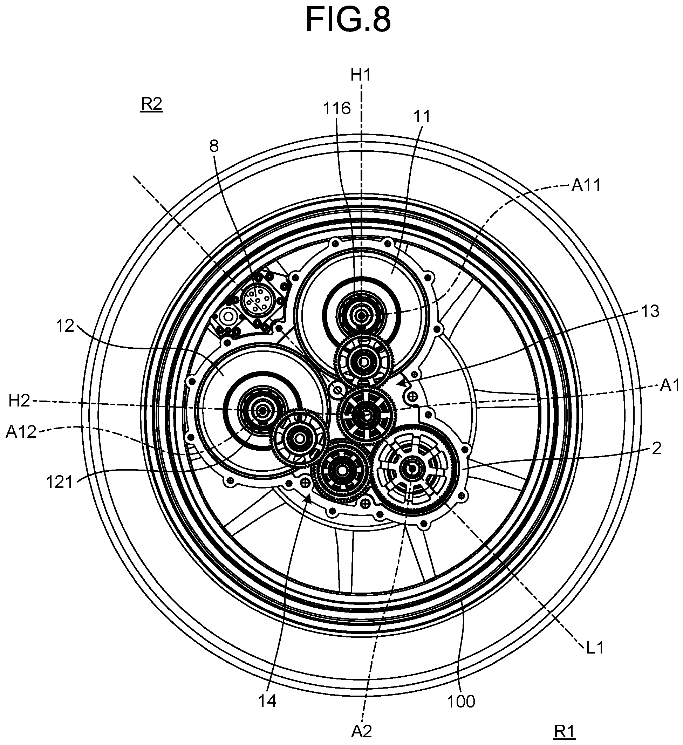

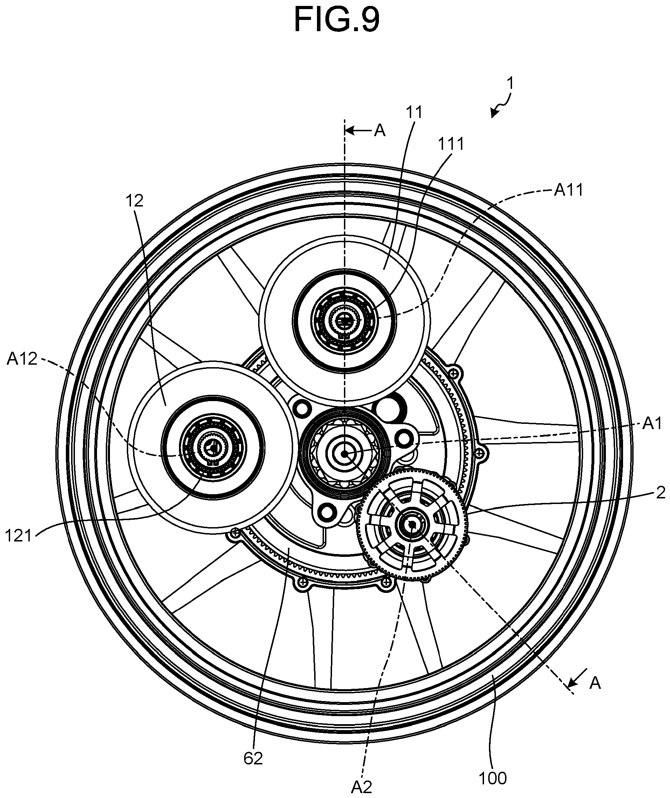

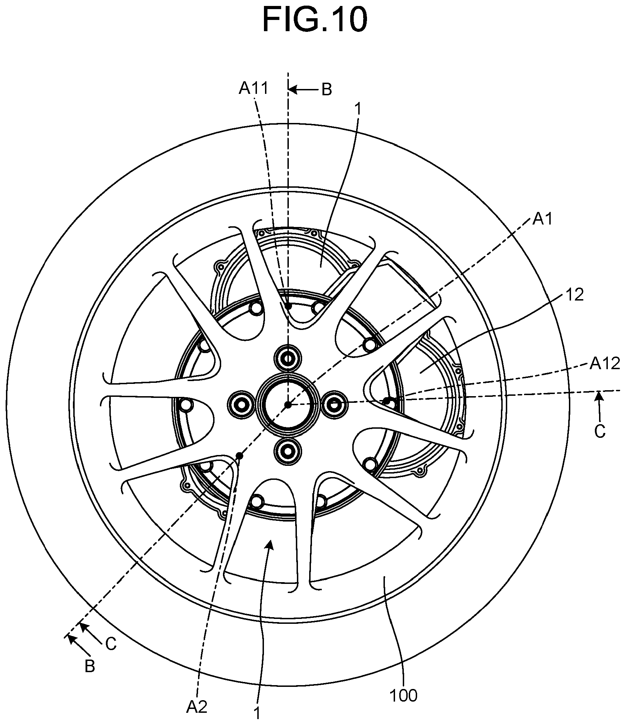

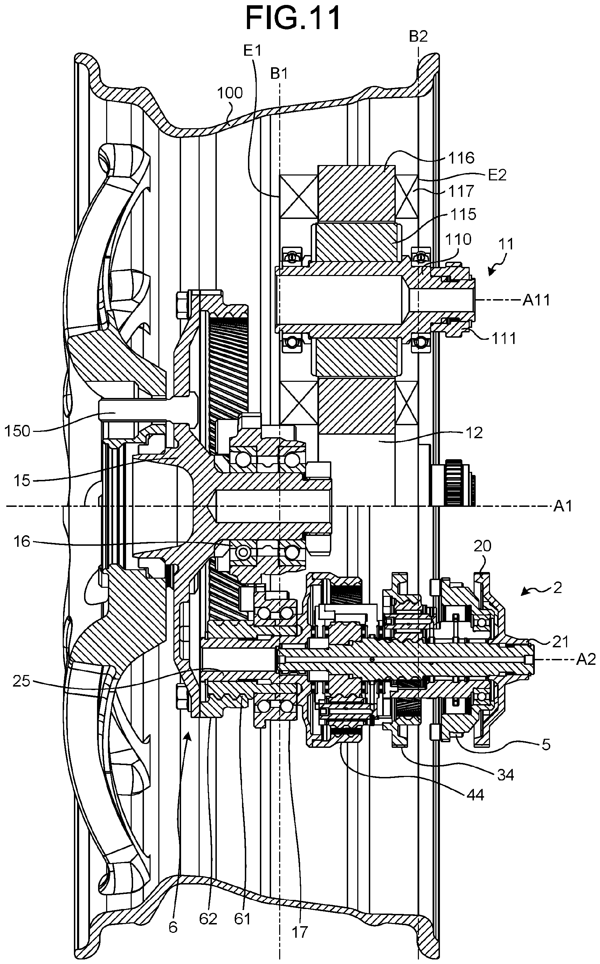

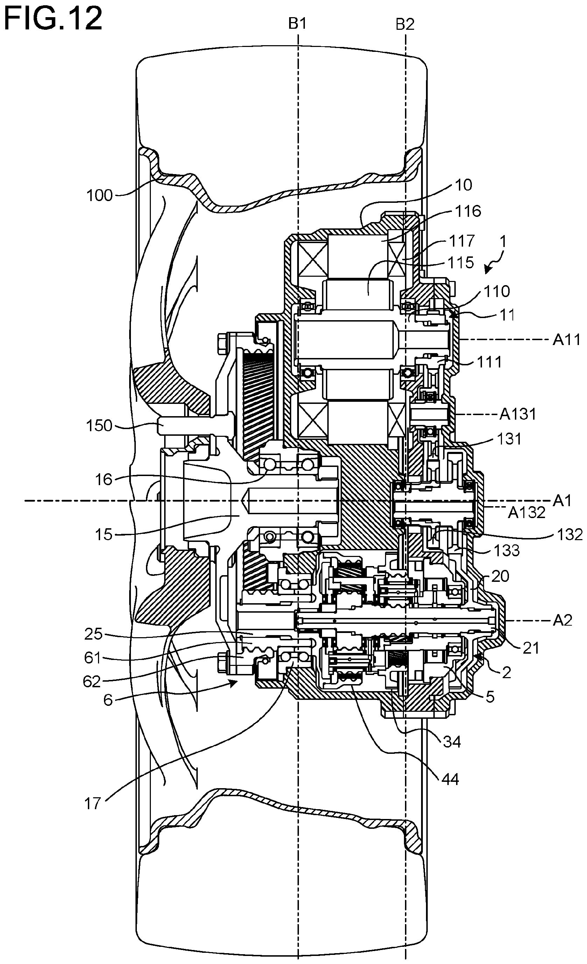

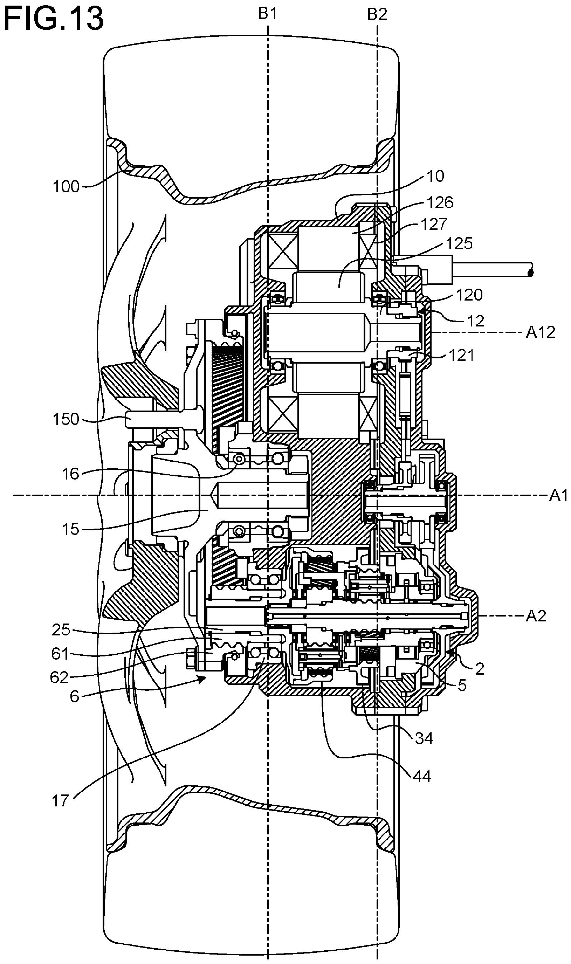

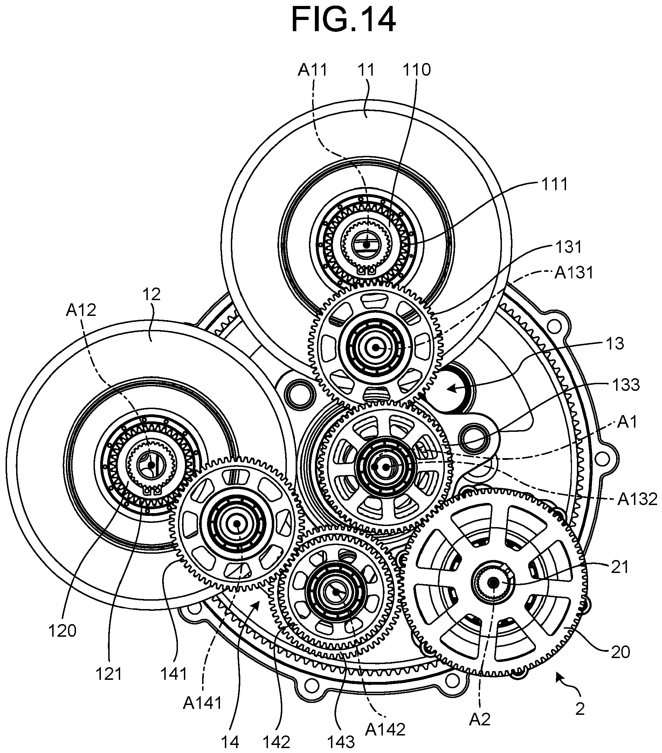

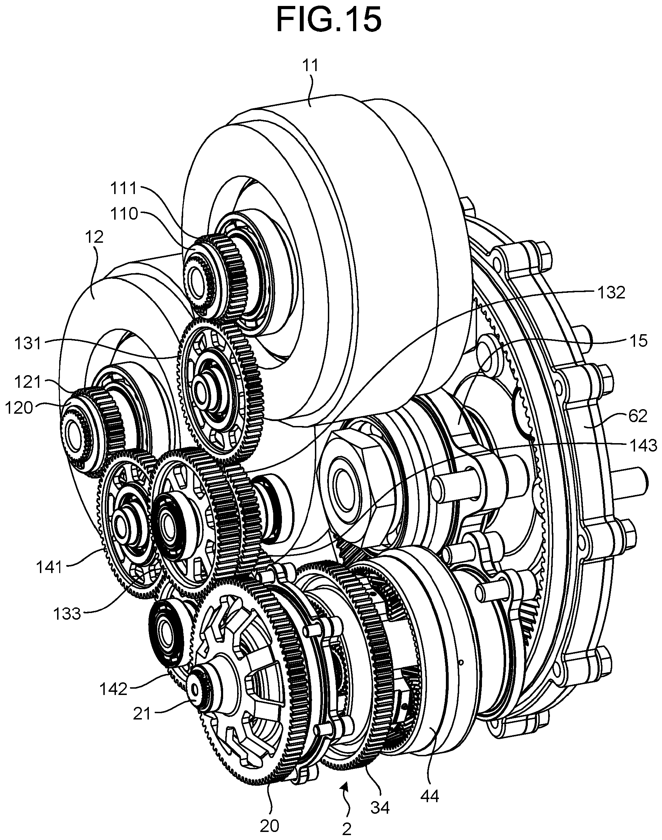

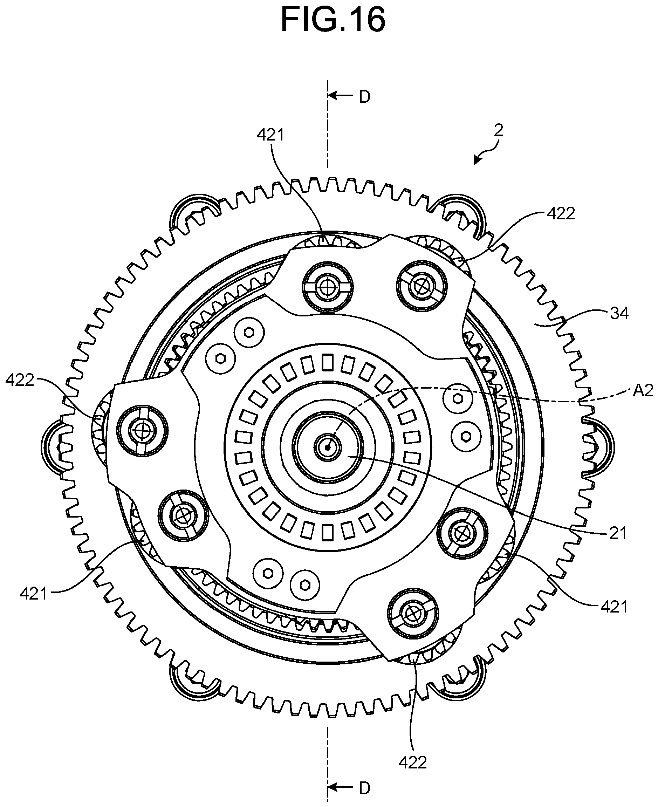

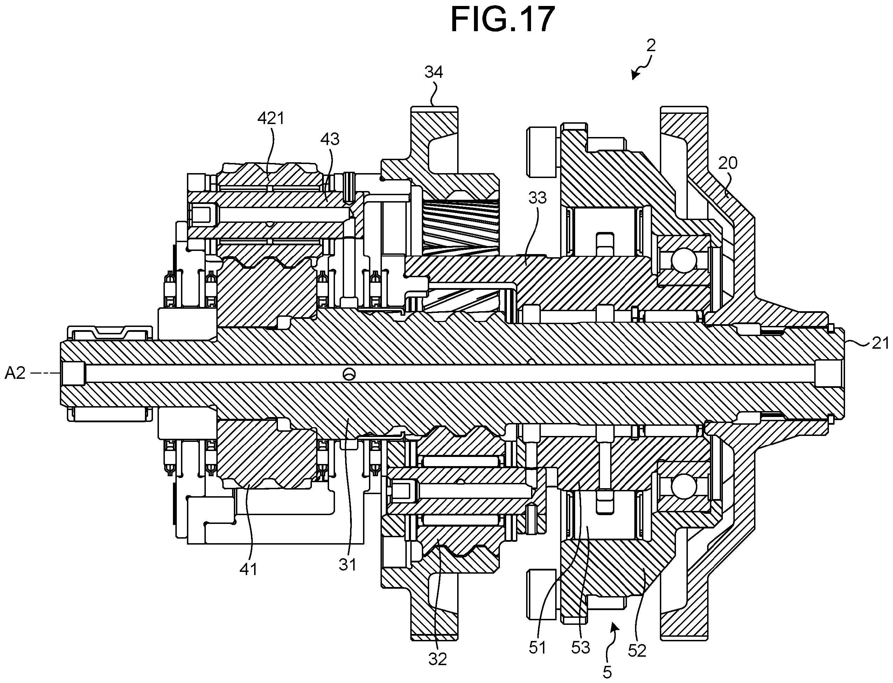

FIG. 4 is a perspective view of the wheel on which the electric vehicle driving device in the embodiment is mounted. FIG. 5 is a perspective view of the wheel on which the electric vehicle driving device in the embodiment is mounted. FIG. 6 is a perspective view of the electric vehicle driving device in the embodiment. FIG. 7 is a perspective view of the electric vehicle driving device in the embodiment. FIG. 8 is a front view of the electric vehicle driving device in the embodiment. FIG. 9 is a front view of the electric vehicle driving device in the embodiment. FIG. 10 is a rear view of the electric vehicle driving device in the embodiment. FIG. 11 is a cross-sectional view along line A-A in FIG. 9. FIG. 12 is a cross-sectional view along line B-B in FIG. 10. FIG. 13 is a cross-sectional view along line C-C in FIG. 10. FIG. 14 is a front view of the first motor, the first reduction gear, the second motor, the second reduction gear, and the transmission device in the embodiment. FIG. 15 is a perspective view of the first motor, the first reduction gear, the second motor, the second reduction gear, and the transmission device in the embodiment. FIG. 16 is a rear view of the transmission device. FIG. 17 is a cross-sectional view along line D-D in FIG. 16.

In FIGS. 8, 14, and 15, the case 10 is omitted. In FIG. 9, the case 10, the first reduction gear 13, and the second reduction gear 14 are omitted. In FIGS. 12 and 13, the case 10 and the wheel 100 are hatched and hatching of the other members is omitted for ease of viewing. In FIG. 16, the second ring gear 44 is omitted.

In the following description, a direction parallel to the rotation axis A1 is simply referred to as an axial direction. A direction orthogonal to the axial direction is simply referred to as a radial direction. In other words, the radial direction is a direction orthogonal to the rotation axis A1.

As illustrated in FIG. 4 and FIG. 5, the electric vehicle driving device 1 is arranged on the inner side of the wheel 100 of the vehicle. The electric vehicle driving device 1 is fixed to the wheel 100 with a plurality of stud bolts 150 projecting from the output member 15. As illustrated in FIG. 12, the output member 15 is supported on the case 10 with a first bearing 16 interposed therebetween. The fourth pinion gear 61 of the third reduction gear 6 is supported on the case 10 with a second bearing 17 interposed therebetween. The first motor 11, the first reduction gear 13, the second motor 12, the second reduction gear 14, and the transmission device 2 are arranged inside the case 10.

As illustrated in FIG. 8, in the electric vehicle driving device 1, a position of the rotation axis A12 of the second motor 12 differs from a position of the rotation axis A11 of the first motor 11. As illustrated in FIG. 8, a straight line passing through the rotation axis A2 of the transmission device 2 and the rotation axis A1 of the output member 15 when seen from the direction parallel to the rotation axis A1 is assumed to be a straight line L1. The rotation axis A11 of the first motor 11 is located on one side of the straight line L1. The rotation axis A12 of the second motor 12 is located on the other side of the straight line L1. That is to say, the rotation axis A12 of the second motor 12 is located on the opposite side to the rotation axis A11 of the first motor 11 with respect to the straight line L1. In the embodiment, a distance to the rotation axis A12 of the second motor 12 from the straight line L1 is equal to a distance to the rotation axis A11 of the first motor 11 from the straight line L1.

As illustrated in FIG. 8, the electric vehicle driving device 1 includes a connector 8. The first motor 11 and the second motor 12 are driven by a three-phase alternating current including a U phase, a V phase, and a W phase. The connector 8 is connected to an inverter (power supply device) provided in the vehicle with a cable. To be specific, the cable having a plurality of core wires is connected to the connector 8 in order to supply the three-phase alternating current to each of the first motor 11 and the second motor 12. The connector 8 has seven connection portions that are electrically connected to the core wires of the cable. Six of the seven connection portions are connected to the core wires connected to the inverter. One of the seven connection portions is connected to a ground wiring.

As illustrated in FIG. 8, when seen from the direction parallel to the rotation axis A1 of the output member 15, a half line passing through the rotation axis A11 of the first motor 11 with the rotation axis A1 serving as an end point thereof is assumed to be a first half line H1 and a half line passing through the rotation axis A12 of the second motor 12 with the rotation axis A1 serving as an end point is assumed to be a second half line H2. The connector 8 is located in a smaller region R2 of regions R1 and R2 partitioned by the first half line H1 and the second half line H2.

As illustrated in FIG. 12, the first motor 11 includes the first shaft 110, the first motor gear 111, a first rotor 115, a first stator 116, and a first coil 117. The first shaft 110 is supported on the case 10 with a bearing interposed therebetween. The first motor gear 111 is mounted on an end portion of the first shaft 110 and rotates about the rotation axis A11 together with the first shaft 110. The first rotor 115 is mounted on the first shaft 110 and rotates about the rotation axis A11 together with the first shaft 110. The first rotor 115 includes a plurality of magnets. The first stator 116 is arranged on the outer side of the first rotor 115 in the radial direction and is fixed to the case 10. The first coil 117 is wound around teeth of the first stator 116 with an insulator interposed therebetween. The three-phase alternating current is supplied to the first coil 117.

As illustrated in FIG. 13, the second motor 12 includes the second shaft 120, the second motor gear 121, a second rotor 125, a second stator 126, and a second coil 127. The second shaft 120 is supported on the case 10 with a bearing interposed therebetween. The second motor gear 121 is mounted on an end portion of the second shaft 120 and rotates about the rotation axis A12 together with the second shaft 120. The second rotor 125 is mounted on the second shaft 120 and rotates about the rotation axis A12 together with the second shaft 120. The second rotor 125 includes a plurality of magnets. The second stator 126 is arranged on the outer side of the second rotor 125 in the radial direction and is fixed to the case 10. The second coil 127 is wound around teeth of the second stator 126 with an insulator interposed therebetween. The three-phase alternating current is supplied to the second coil 127.

In the embodiment, the outer diameter of the second motor 12, the length thereof in the axial direction, and the wound wire structure (winding manner of the second coil 127) thereof are the same as the outer diameter of the first motor 11, the length thereof in the axial direction, and the wound wire structure (winding manner of the first coil 117) thereof. A position of an end portion of the second motor 12 in the axial direction is the same as a position of an end portion of the first motor 11 in the axial direction.

As illustrated in FIG. 11 and FIG. 12, a plane passing through a first end portion E1 as a portion located on the endmost side in the axial direction among an end portion of the first rotor 115 in the axial direction, an end portion of the first stator 116 in the axial direction, and an end portion of the first coil 117 in the axial direction and being orthogonal to the rotation axis A1 is assumed to be a first plane B1. A plane passing through a second end portion E2 as a portion located on the endmost side on the opposite side to the first end portion E1 in the axial direction among an end portion of the first rotor 115 in the axial direction, an end portion of the first stator 116 in the axial direction, and an end portion of the first coil 117 in the axial direction and being orthogonal to the rotation axis A1 is assumed to be a second plane B2. In the embodiment, the first end portion E1 is one end (end portion on the wheel 100 side) of the first coil 117 in the axial direction. The second end portion E2 is the other end (end portion on the vehicle body side) of the first coil 117 in the axial direction. As illustrated in FIG. 11 and FIG. 13, the second rotor 125, the second stator 126, and the second coil 127 are located between the first plane B1 and the second plane B2. In the embodiment, the first plane B1 passes through one end (end portion on the wheel 100 side) of the second coil 127 in the axial direction. The second plane B2 passes through the other end (end portion on the vehicle body side) of the second coil 127 in the axial direction.

As illustrated in FIG. 14, the first reduction gear 13 is located between the first motor gear 111 and the transmission device 2. A rotation axis A131 of the first gear 131 is located between the rotation axis A11 and the rotation axis A2. A rotation axis A132 of the second gear 132 and the third gear 133 is located between the rotation axis A131 and the rotation axis A2.

As illustrated in FIG. 14, the second reduction gear 14 is located between the second motor gear 121 and the transmission device 2. A rotation axis A141 of the first gear 141 is located between the rotation axis A12 and the rotation axis A2. A rotation axis A142 of the second gear 142 and the third gear 143 is located between the rotation axis A141 and the rotation axis A2.

As illustrated in FIG. 11, at least a part of the transmission device 2 is located between the first plane B1 and the second plane B2. In the embodiment, the length of the transmission device 2 in the axial direction is larger than a distance between the first plane B1 and the second plane B2.

The clutch 5 is, for example, a what-is-called cam clutch device. As illustrated in FIG. 17, the clutch 5 includes an inner race 51, an outer race 52, and a roller 53. In the embodiment, the inner race 51 is formed integrally with the first carrier 33. The outer race 52 is fixed to the case 10 with a bolt. The roller 53 is arranged between the inner race 51 and the outer race 52. The roller 53 is supported on the inner race 51 and rotates together with the inner race 51. When the inner race 51 rotates in the first direction, the roller 53 is engaged with the outer race 52. The inner race 51 cannot rotate, so that the first carrier 33 also cannot rotate. The engaged state of the clutch 5 is thereby established. On the other hand, when the inner race 51 rotates in the second direction as the opposite direction to the first direction, the roller 53 is not engaged with the outer race 52. The inner race 51 can rotate, so that the first carrier 33 can also rotate. The separated state of the clutch 5 is thereby established.

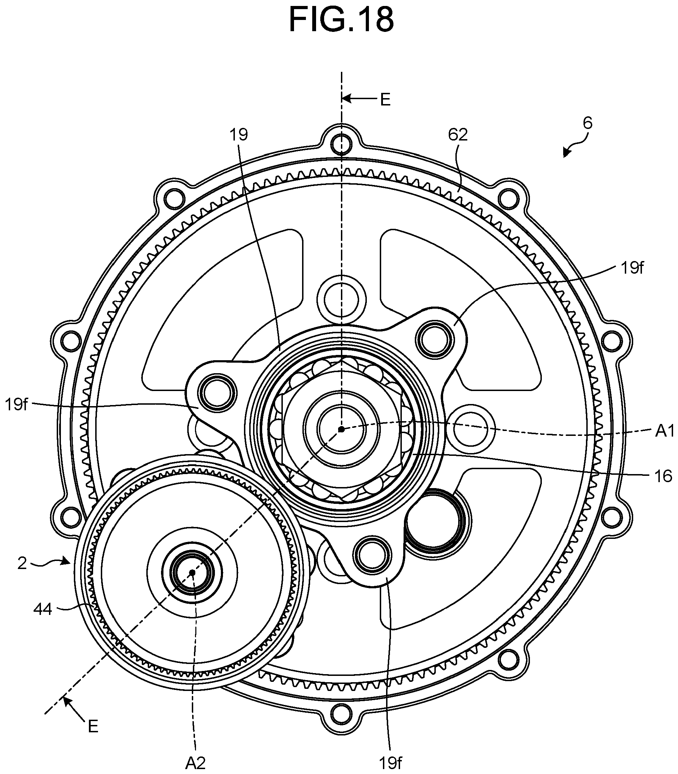

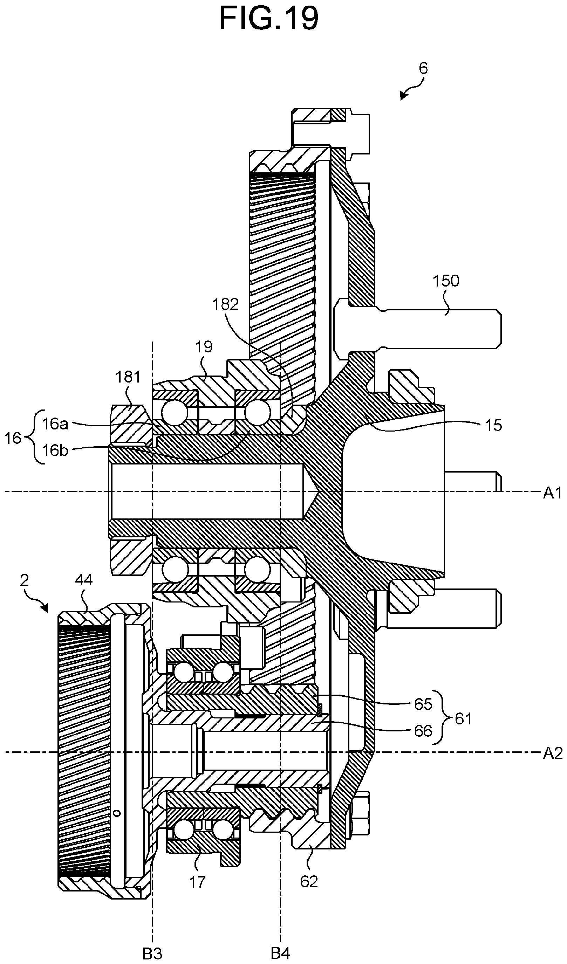

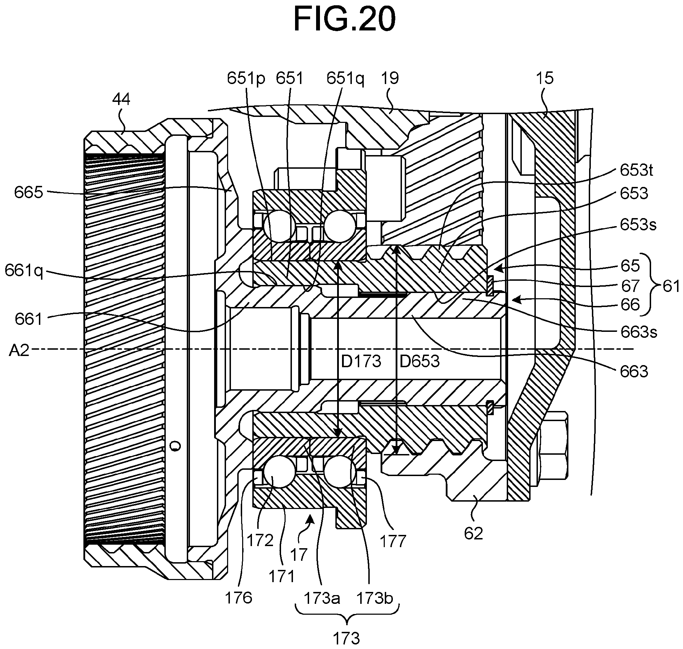

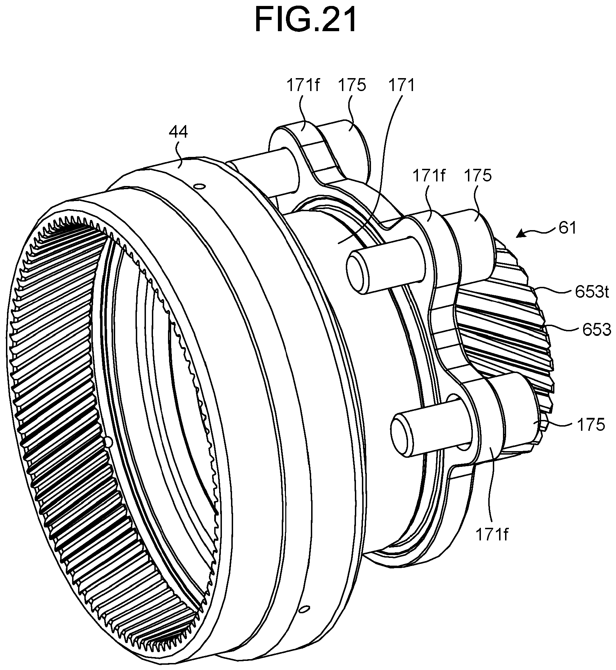

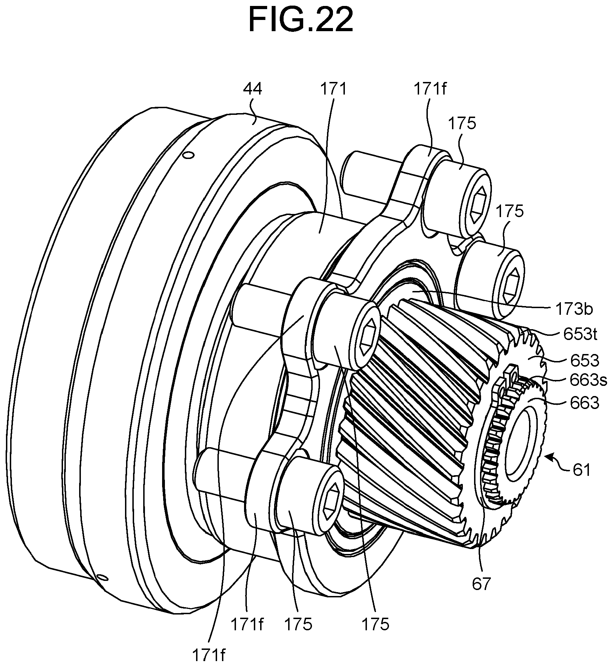

FIG. 18 is a front view of the third reduction gear. FIG. 19 is a cross-sectional view along line E-E in FIG. 18. FIG. 20 is an enlarged view of the vicinity of the fourth pinion gear. FIG. 21 is a perspective view of the second ring gear, the fourth pinion gear, and the second bearing. FIG. 22 is a perspective view of the second ring gear, the fourth pinion gear, and the second bearing.

As illustrated in FIG. 19, the first bearing 16 includes an inner bearing 16a and an outer bearing 16b that is located on a side closer to the wheel 100 than the inner bearing 16a is. The output member 15 is supported by the inner bearing 16a and the outer bearing 16b. The inner bearing 16a and the outer bearing 16b are mounted on the case 10 with an attachment 19 interposed therebetween (see FIG. 12). For example, the attachment 19 has a plurality of flanges 19f as illustrated in FIG. 18. The attachment 19 is fixed to the case 10 with, for example, bolts that pass through the flanges 19f. The inner bearing 16a and the outer bearing 16b are press-fitted into the inside of the attachment 19. The output member 15 is press-fitted into the inside of the inner bearing 16a and the outer bearing 16b. As illustrated in FIG. 19, the inner bearing 16a is positioned by being in contact with a positioning member 181 mounted on the output member 15. The outer bearing 16b is positioned by being brought into contact with a positioning member 182 mounted on the output member 15.

As illustrated in FIG. 19, the second bearing 17 is a member that is separate from the first bearing 16. The second bearing 17 is mounted on the case 10. The second bearing 17 is located on an outer side relative to the first bearing 16 in the radial direction. The second bearing 17 is located on a side closer to the wheel 100 with respect to a third plane B3. The third plane B3 is a plane passing through an end portion of the first bearing 16 that is more distant from the third ring gear 62 in the axial direction (an end portion of the inner bearing 16a on a side opposite to the wheel 100) and being orthogonal to the rotation axis A2. Furthermore, the second bearing 17 is located on a side opposite to the wheel 100 with respect to a fourth plane B4. The fourth plane B4 is a plane passing through an end portion of the first bearing 16 that is closer to the third ring gear 62 in the axial direction (an end portion of the outer bearing 16b on the wheel 100 side) and being orthogonal to the rotation axis A2.

In the embodiment, the second bearing 17 is a double-row angular ball bearing. The second bearing 17 bears an axial load, a radial load, and a moment load. As illustrated in FIG. 20, the second bearing 17 includes an outer ring 171, an inner ring 173, a plurality of rolling elements 172, a cage 176, and a cage 177.

The outer ring 171 is an annular member. As illustrated in FIG. 21 and FIG. 22, the outer ring 171 has a plurality of flanges 171f. The outer ring 171 is fixed to the case 10 with bolts 175 that pass through the flanges 171f. Surfaces of the flanges 171f on the wheel 100 side are in contact with head portions of the bolts 175. Surfaces of the flanges 171f on the transmission device 2 side are in contact with the case 10.

As illustrated in FIG. 20, the inner ring 173 includes a first inner ring piece 173a and a second inner ring piece 173b. The first inner ring piece 173a and the second inner ring piece 173b are annular members. The first inner ring piece 173a is inserted into the inside of the outer ring 171 from one side of the outer ring 171 in the axial direction. The second inner ring piece 173b is inserted into the inside of the outer ring 171 from the other side of the outer ring 171 in the axial direction.

The rolling elements 172 are arranged between the outer ring 171 and the first inner ring piece 173a and between the outer ring 171 and the second inner ring piece 173b. The rolling elements 172 are positioned by the cages to be aligned at regular intervals. With the rolling elements 172, the first inner ring piece 173a and the second inner ring piece 173b can rotate with respect to the outer ring 171. The first inner ring piece 173a and the second inner ring piece 173b integrally rotate about the rotation axis A2.

The cage 176 is located between the outer ring 171 and the first inner ring piece 173a. The cage 176 holds the rolling elements 172 arranged between the outer ring 171 and the first inner ring piece 173a. The cage 177 is located between the outer ring 171 and the second inner ring piece 173b. The cage 177 holds the rolling elements 172 arranged between the outer ring 171 and the second inner ring piece 173b.

As illustrated in FIG. 20, the fourth pinion gear 61 is supported by the second bearing 17 and rotates about the rotation axis A2. The fourth pinion gear 61 includes an outer shaft 65, an inner shaft 66, and a snap ring 67.

As illustrated in FIG. 20, the outer shaft 65 is a tubular member. The outer shaft 65 has a small-diameter portion 651 and a large-diameter portion 653. For example, the small-diameter portion 651 and the large-diameter portion 653 are integrally formed.

The small-diameter portion 651 is press-fitted into the inside of the second bearing 17. The small-diameter portion 651 has a bearing fitting surface 651p that is a cylindrical outer circumferential surface and a second fitting surface 651q that is a cylindrical inner circumferential surface. The bearing fitting surface 651p is in contact with the inner circumferential surfaces of the first inner ring piece 173a and the second inner ring piece 173b.

The large-diameter portion 653 is located on the side closer to the wheel 100 with respect to the small-diameter portion 651. The maximum outer diameter D653 of the large-diameter portion 653 is larger than the bore diameter D173 of the inner ring 173 (i.e., the outer diameter of the small-diameter portion 651). The large-diameter portion 653 has a plurality of teeth 653t and a plurality of grooves 653s. The teeth 653t are formed on the outer circumferential surface of the large-diameter portion 653 as illustrated in FIG. 21 and FIG. 22. The teeth 653t are engaged with a plurality of teeth formed on the inner circumferential surface of the third ring gear 62. An end surface of the large-diameter portion 653 (an end surface of the teeth 653t) is in contact with the second inner ring piece 173b. A groove 653s is formed on the inner circumferential surface of the large-diameter portion 653 and extends in the axial direction. For example, a plurality of the grooves 653s are arranged in a circumferential direction about the rotation axis A2 at regular intervals. In other words, the grooves 653s form a spline.

For example, if the maximum outer diameter D653 of the large-diameter portion 653 is reduced, the reduction ratio of the third reduction gear 6 increases. However, the fourth pinion gear 61 needs to withstand large torque, and thus it is desirable that the maximum outer diameter D653 of the large-diameter portion 653 be large to a certain extent. Thus, when the reduction ratio of the third reduction gear 6 is increased, the diameter of the third ring gear 62 needs to be increased.

As illustrated in FIG. 20, at least a part of the inner shaft 66 is located on the inner side of the outer shaft 65. The inner shaft 66 is inserted into the inside of the outer shaft 65 from the transmission device 2 side, and passes through the outer shaft 65. The inner shaft 66 has a base portion 661, a torque transmitting portion 663, and a coupling portion 665. For example, the base portion 661, the torque transmitting portion 663, and the coupling portion 665 are integrally formed.

The base portion 661 is located on the inner side of the small-diameter portion 651. The base portion 661 is press-fitted into the inside of the small-diameter portion 651. The base portion 661 has a first fitting surface 661q that is a cylindrical outer circumferential surface. The first fitting surface 661q is in contact with the second fitting surface 651q of the small-diameter portion 651.

The torque transmitting portion 663 is located on the inner side of the large-diameter portion 653. The torque transmitting portion 663 has a plurality of projections 663s formed on the outer circumferential surface thereof. The projections 663s extend in the axial direction, and are fitted into the grooves 653s of the large-diameter portion 653. For example, the projections 663s are arranged in the circumferential direction about the rotation axis A2 at regular intervals. In other words, the projections 663s form a spline. The spline formed by the grooves 653s of the large-diameter portion 653 is engaged with the spline formed by the projections 663s of the torque transmitting portion 663. With this configuration, torque is transmitted from the inner shaft 66 to the outer shaft 65.

The coupling portion 665 is located on a side closer to the transmission device 2 with respect to the second bearing 17. The coupling portion 665 extends from the base portion 661 toward the radial direction. The coupling portion 665 is coupled to the second ring gear 44 of the transmission device 2. Thus, the inner shaft 66 rotates integrally with the second ring gear 44. The coupling portion 665 is in contact with the first inner ring piece 173a.

As illustrated in FIG. 20, the snap ring 67 is mounted on the inner shaft 66. The snap ring 67 is fitted into an annular groove that is formed on a portion of the torque transmitting portion 663 protruding from the outer shaft 65. The snap ring 67 is in contact with the end surface of the large-diameter portion 653. The second bearing 17 is interposed between the large-diameter portion 653 and the coupling portion 665, and relative movement of the inner shaft 66 and the outer shaft 65 is restricted by the snap ring 67. Thus, the second bearing 17, the inner shaft 66, and the outer shaft 65 are positioned.

The third reduction gear 6 does not necessarily has to be arranged between the transmission device 2 and the wheel 100 in the electric vehicle driving device 1. The third reduction gear 6 may be used in another portion of the electric vehicle driving device 1. The third reduction gear 6 does not necessarily have to be used in the electric vehicle driving device 1, and may be used in another portion of the vehicle. The third reduction gear 6 may be also used for a vehicle other than the electric vehicle. For example, the third reduction gear 6 may be used as a member that transmits power of an internal combustion engine as a prime mover. The first motor 11 and the second motor 12 described above are merely examples of a prime mover. The third reduction gear 6 may be also used for a device other than the vehicle. The third reduction gear 6 can be generally used for various devices that transmit power.

The fourth pinion gear 61 does not necessarily have to be coupled to the transmission device 2. For example, the inner shaft 66 of the fourth pinion gear 61 may be coupled to a shaft of a motor, for example. The inner shaft 66 only has to be coupled to at least a rotational member that rotates with power from a prime mover. The above-mentioned second ring gear is merely an example of the rotational member.

The first bearing 16 and the second bearing 17 do not necessarily have to be fixed to the case 10. Such a supporting member on which the first bearing 16 and the second bearing 17 are mounted is not particularly limited if it is a member that can withstand load applied to the first bearing 16 and the second bearing 17.

The whole of the second bearing 17 does not necessarily have to be located in an area between the third plane B3 and the fourth plane B4. For example, a part of the second bearing 17 may be located on the side closer to the transmission device 2 with respect to the third plane B3. At least a part of the second bearing 17 only has to be located on the side closer to the wheel 100 with respect to the third plane B3.

The large-diameter portion 653 does not necessarily have to have a plurality of the grooves 653s. The large-diameter portion 653 only has to have at least one groove 653s. The torque transmitting portion 663 does not necessarily have to have a plurality of the projections 663s. The torque transmitting portion 663 only has to have at least one projection 663s. The large-diameter portion 653 does not necessarily have to have a groove, and the torque transmitting portion 663 does not necessarily have to have a projection. In other words, one of the large-diameter portion 653 and the torque transmitting portion 663 only has to have at least one groove, and the other thereof only has to have a projection that fits into the groove.

Both of the first motor 11 and the second motor 12 may not be necessarily driven in the low gear mode. Only the first motor 11 of the first motor 11 and the second motor 12 may be driven. The numbers of teeth of the above-mentioned gears are merely examples and are not particularly limited.

As described above, the reduction gear (third reduction gear 6) of the embodiment includes the first bearing 16, the output member 15, the internal gear (third ring gear 62), the second bearing 17, and the pinion gear (fourth pinion gear 61). The first bearing 16 is mounted on the supporting member (case 10). The output member 15 is supported by the first bearing 16 and rotates about the first rotation axis (rotation axis A1). The internal gear is coupled to the output member 15 and rotates about the first rotation axis together with the output member 15. The second bearing 17 is mounted on the supporting member on an outer side relative to the first bearing 16 in the radial direction of the internal gear. The pinion gear is supported by the second bearing 17, rotates about the second rotation axis (rotation axis A2) that is different from the first rotation axis, and is engaged with the internal gear. At least a part of the second bearing 17 is located on a side closer to the internal gear with respect to the plane (third plane B3) passing through an end portion of the first bearing 16 that is more distant from the internal gear in an axial direction parallel to the second rotation axis and being orthogonal to the second rotation axis.

With this configuration, the pinion gear (fourth pinion gear 61) is supported by the second bearing 17 at a position closer to the internal gear (third ring gear 62). Thus, backlash in the pinion gear is reduced. Furthermore, the second bearing 17 is a member that is separate from the first bearing 16, and is located on the outer side relative to the first bearing 16 in the radial direction. Thus, increase in weight according to the distance between the pinion gear and the first bearing 16 is suppressed in comparison to the case where the second bearing 17 is mounted on the member (attachment 19) that supports the outer ring of the first bearing 16. In other words, the weight of the reduction gear (third reduction gear 6) is less likely to increase even if the internal gear is upsized in order to increase the reduction ratio. Accordingly, the reduction gear of the embodiment enables an increase in the reduction ratio and weighs lightly.

In the reduction gear (third reduction gear 6), the second bearing 17 is a double-row angular ball bearing.

With this configuration, the second bearing 17 can bear an axial load, a radial load, and a moment load. This eliminates the need to arrange an additional bearing such as a radial needle bearing between a distal end of the pinion gear (fourth pinion gear 61) and the output member 15. Accordingly, the length of the reduction gear (third reduction gear 6) in the axial direction can be reduced.

In the reduction gear (third reduction gear 6), the pinion gear (fourth pinion gear 61) includes the tubular outer shaft 65 and the inner shaft 66 at least a part of which is located on the inner side of the outer shaft 65 and that rotates together with the outer shaft 65. The outer shaft 65 has the small-diameter portion 651 that is in contact with the inner circumferential surface of the inner ring 173 of the second bearing 17 and the large-diameter portion 653 that is engaged with the internal gear. The maximum outer diameter D653 of the large-diameter portion 653 is larger than the bore diameter D173 of the inner ring 173.

In order to increase torque that the pinion gear (fourth pinion gear 61) can transmit, it is preferable that the large-diameter portion 653 that is engaged with the internal gear (third ring gear 62) be larger to a certain extent. Meanwhile, for weight reduction, it is preferable that the size of the second bearing 17 be smaller. However, if the pinion gear is formed of one member, the outer diameter of the large-diameter portion 653 needs to be set smaller than the bore diameter of the second bearing 17, which makes it difficult to reduce the size of the second bearing 17 while maintaining the outer diameter of the large-diameter portion 653. By contrast, the pinion gear of the embodiment includes the outer shaft 65 and the inner shaft 66, and thus the outer diameter of the large-diameter portion 653 can be set larger than the bore diameter of the second bearing 17. Accordingly, the reduction gear of the embodiment can achieve compatibility between increase in torque that can be transmitted and weight reduction.

In the reduction gear (third reduction gear 6), the inner shaft 66 has the base portion 661 located on the inner side of the small-diameter portion 651 and the torque transmitting portion 663 located on the inner side of the large-diameter portion 653. The base portion 661 has the first fitting surface 661q that is a cylindrical outer circumferential surface. The small-diameter portion 651 has the second fitting surface 651q that is a cylindrical inner circumferential surface and is in contact with the first fitting surface 661q. One of the outer circumferential surface of the torque transmitting portion 663 and the inner circumferential surface of the large-diameter portion 653 has the grooves 653s that extend in the axial direction. The other of the outer circumferential surface of the torque transmitting portion 663 and the inner circumferential surface of the large-diameter portion 653 has the projections 663s that extend in the axial direction and fit into the grooves 653s.

With this configuration, the first fitting surface 661q and the second fitting surface 651q that are located on an inner side of the second bearing 17 are in contact with each other, so that misalignment between the second bearing and the pinion gear (fourth pinion gear 61) is prevented. In other words, misalignment of the rotation axis of the second bearing with respect to the rotation axis of the pinion gear is prevented. With the grooves 653s and the projections 663s, torque is transmitted from the inner shaft 66 to the outer shaft 65 at a position overlapping the internal gear (third ring gear 62). Thus, the length of the reduction gear (third reduction gear 6) in the axial direction is shorter than the length thereof in the case when the torque is transmitted at another position (e.g., a position on a side opposite to the large-diameter portion 653 with respect to the second bearing).

### First Modification

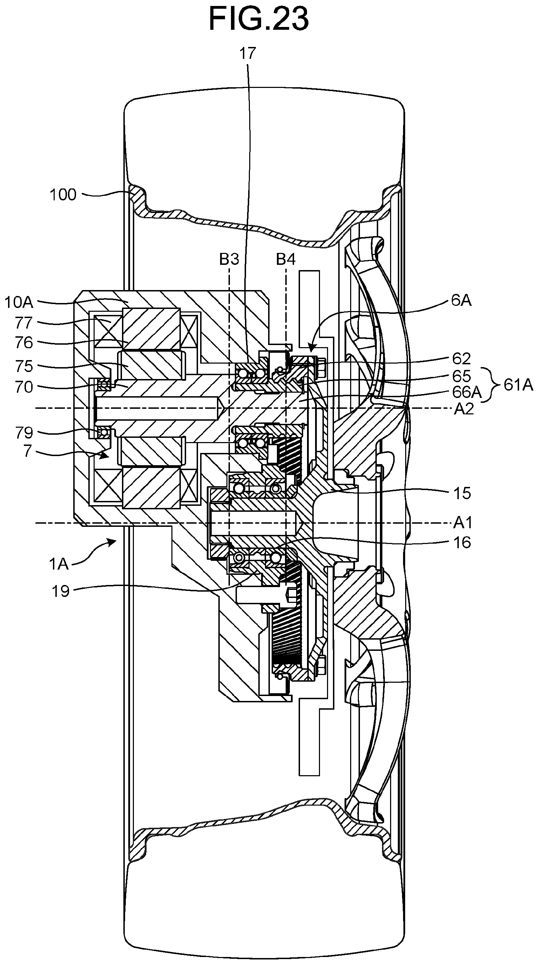

FIG. 23 is a cross-sectional view of an electric vehicle driving device according to a first modification. The same reference numerals denote the same components as those described in the above-mentioned embodiment and overlapping description thereof is omitted.

As illustrated in FIG. 23, an electric vehicle driving device 1A according to a first modification includes a case 10A, a motor 7, and a reduction gear 6A. The electric vehicle driving device 1A does not include a transmission device. Power of the motor 7 is transmitted directly to the reduction gear 6A.

As illustrated in FIG. 23, the motor 7 includes a shaft 70, a rotor 75, a stator 76, and a coil 77. The shaft 70 is supported on the case 10A with a bearing 79 interposed therebetween. The rotor 75 is mounted on the shaft 70 and rotates about the rotation axis A2 together with the shaft 70. The rotor 75 includes a plurality of magnets. The stator 76 is arranged on an outer side of the rotor 75 in the radial direction, and is fixed to the case 10A. The coil 77 is wound around teeth of the stator 76 with an insulator interposed therebetween. The three-phase alternating current is supplied to the coil 77.

As illustrated in FIG. 23, the reduction gear 6A includes a pinion gear 61A. The pinion gear 61A is supported by the second bearing 17 and rotates about the rotation axis A2. The pinion gear 61A includes an inner shaft 66A. At least a part of the inner shaft 66A is located on an inner side of the outer shaft 65. The inner shaft 66A is different from the above-mentioned inner shaft 66 in being coupled to the shaft 70 of the motor 7 instead of the transmission device 2. For example, in the first modification, the inner shaft 66A is formed integrally with the shaft 70. The inner shaft 66A has portions that correspond to the base portion 661 and the torque transmitting portion 663 of the inner shaft 66 described above.

### (Second Modification)

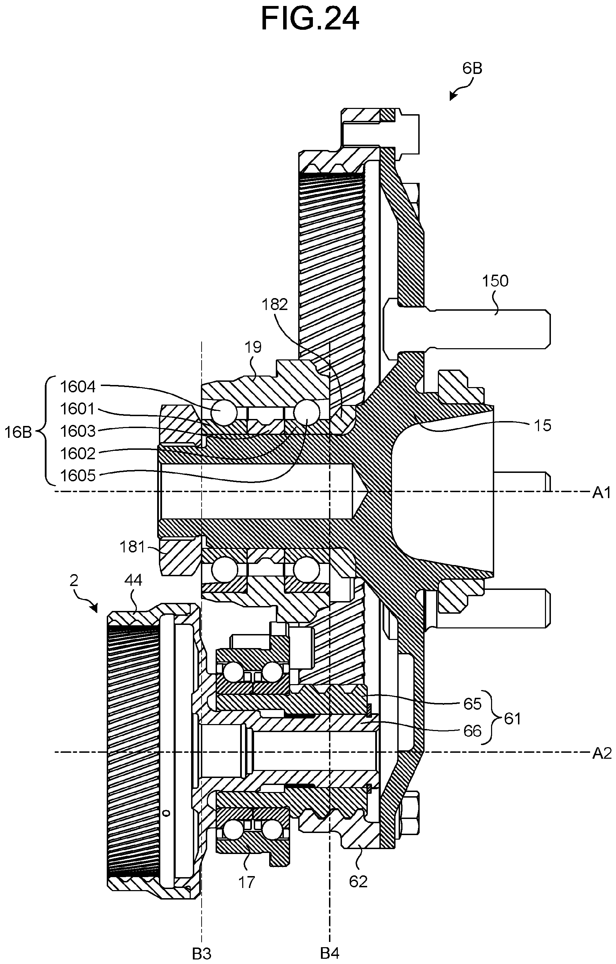

FIG. 24 is a cross-sectional view of a third reduction gear according to a second modification. The same reference numerals denote the same components as those described in the above-mentioned embodiment and overlapping description thereof is omitted.

As illustrated in FIG. 24, the third reduction gear 6B in the second modification includes a first bearing 16B. The first bearing 16B is mounted on the case 10 (FIG. 12 and FIG. 13) as a supporting member with the attachment 19 interposed therebetween. The first bearing 16B includes a first inner ring piece 1601, a second inner ring piece 1602, a spacer 1603, a plurality of first rolling elements 1604, and a plurality of second rolling elements 1605.

The first inner ring piece 1601 and the second inner ring piece 1602 are annular members. The first inner ring piece 1601 and the second inner ring piece 1602 are in contact with the outer circumferential surface of the output member 15. The second inner ring piece 1602 is arranged on a side closer to the third ring gear 62 than the first inner ring piece 1601 is. The spacer 1603 is arranged between the first inner ring piece 1601 and the second inner ring piece 1602.

The first rolling elements 1604 are arranged in a first row. The first row is arranged between the first inner ring piece 1601 and the attachment 19. The first rolling elements 1604 are positioned by a cage to be aligned at regular intervals. The first rolling elements 1604 are in contact with an inner circumferential surface of the attachment 19 and an outer circumferential surface of the first inner ring piece 1601. In other words, the raceway surfaces of the first rolling elements 1604 are the inner circumferential surface of the attachment 19 and the outer circumferential surface of the first inner ring piece 1601.

The second rolling elements 1605 are arranged in a second row. The second row is arranged between the second inner ring piece 1602 and the attachment 19. The second rolling elements 1605 are positioned by a cage to be aligned at regular intervals. The second rolling elements 1605 are in contact with an inner circumferential surface of the attachment 19 and an outer circumferential surface of the second inner ring piece 1602. In other words, the raceway surfaces of the second rolling elements 1605 are the inner circumferential surface of the attachment 19 and the outer circumferential surface of the second inner ring piece 1602.

As described above, in the reduction gear (third reduction gear 6B) in the second modification, the first bearing 16B is mounted on the supporting member (case 10) with the attachment 19 interposed therebetween. The first bearing 16B includes the first rolling elements 1604 arranged in the first row and the second rolling elements 1605 arranged in the second row. The inner circumferential surfaces of the attachment 19 are in contact with the first rolling elements 1604 and the second rolling elements 1605.

With this configuration, the number of parts of the first bearing 16B can be reduced because the first bearing 16B does not include an outer ring. Thus, the reduction gear (third reduction gear 6B) in the second modification can be configured to be light in weight.

### (Third Modification)

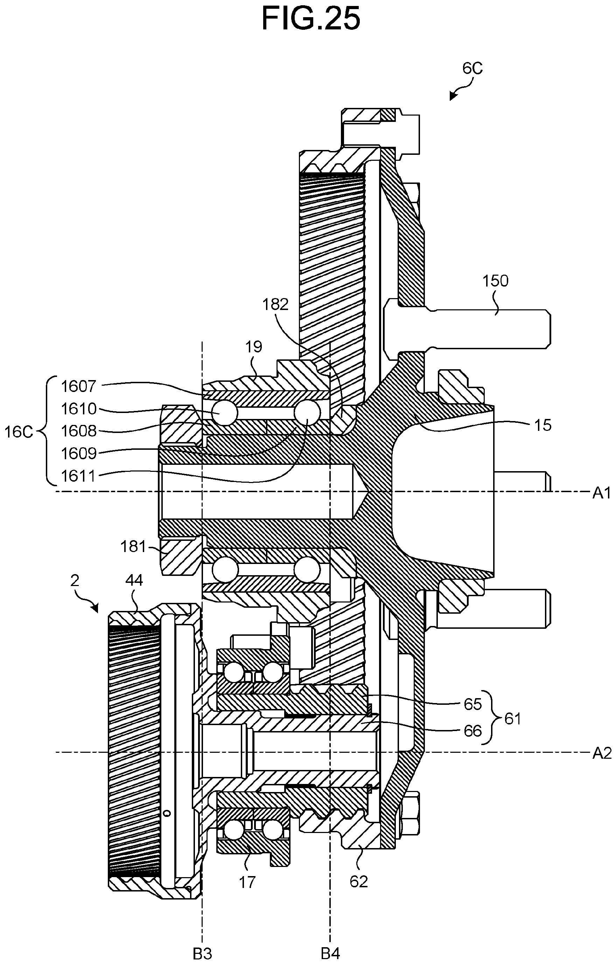

FIG. 25 is a cross-sectional view of a third reduction gear according to a third modification. The same reference numerals denote the same components as those described in the above-mentioned embodiment and overlapping description thereof is omitted.

As illustrated in FIG. 25, the third reduction gear 6C in the third modification includes a first bearing 16C. The first bearing 16C is mounted on the case 10 (FIG. 12 and FIG. 13) as a supporting member with the attachment 19 interposed therebetween. The first bearing 16C includes an outer ring 1607, a first inner ring piece 1608, a second inner ring piece 1609, a plurality of first rolling elements 1610, and a plurality of second rolling elements 1611.

The outer ring 1607 is an annular member. The outer ring 1607 is in contact with the inner circumferential surface of the attachment 19. The first inner ring piece 1608 and the second inner ring piece 1609 are annular members. The first inner ring piece 1608 and the second inner ring piece 1609 are in contact with an outer circumferential surface of the output member 15. The second inner ring piece 1609 is located on a side closer to the third ring gear 62 than the first inner ring piece 1608 is. An end surface of the second inner ring piece 1609 is in contact with an end surface of the first inner ring piece 1608.

The first rolling elements 1610 are arranged in a first row. The first row is arranged between the outer ring 1607 and the first inner ring piece 1608. The first rolling elements 1610 are positioned by a cage to be aligned at regular intervals. The first rolling elements 1610 are in contact with an inner circumferential surface of the outer ring 1607 and an outer circumferential surface of the first inner ring piece 1608. In other words, the raceway surfaces of the first rolling elements 1610 are the inner circumferential surface of the outer ring 1607 and the outer circumferential surface of the first inner ring piece 1608.

The second rolling elements 1611 are arranged in a second row. The second row is arranged between the outer ring 1607 and the second inner ring piece 1609. The second rolling elements 1611 are positioned by a cage to be aligned at regular intervals. The second rolling elements 1611 are in contact with an inner circumferential surface of the outer ring 1607 and an outer circumferential surface of the second inner ring piece 1609. In other words, the raceway surfaces of the second rolling elements 1611 are the inner circumferential surface of the outer ring 1607 and the outer circumferential surface of the second inner ring piece 1609.

### (Fourth Modification)

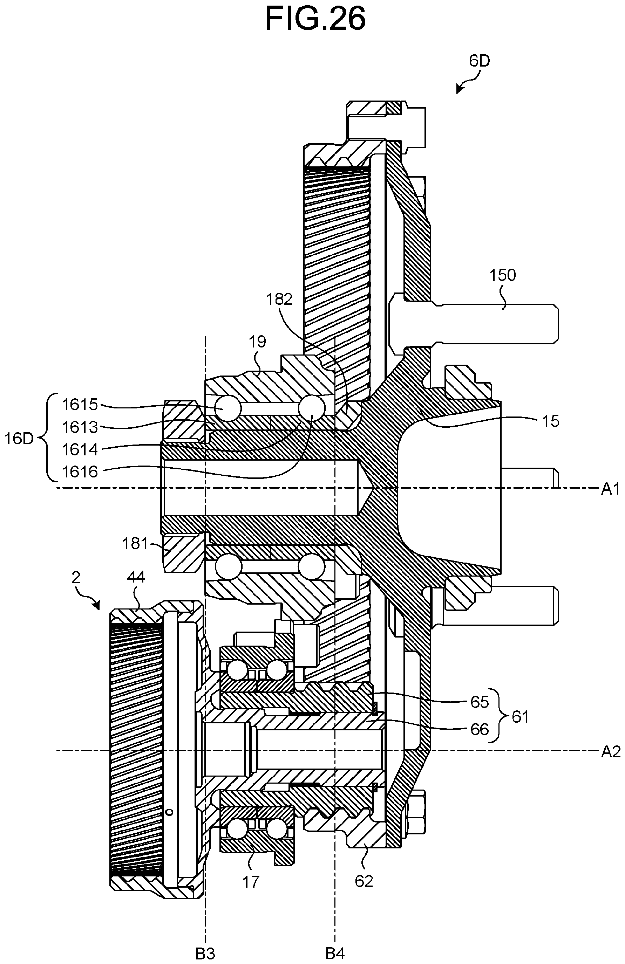

FIG. 26 is a cross-sectional view of a third reduction gear according to a fourth modification. The same reference numerals denote the same components as those described in the above-mentioned embodiment and overlapping description thereof is omitted.

As illustrated in FIG. 26, the third reduction gear 6D in the fourth modification includes a first bearing 16D. The first bearing 16D is mounted on the case 10 (FIG. 12 and FIG. 13) as a supporting member with the attachment 19 interposed therebetween. The first bearing 16D includes a first inner ring piece 1613, a second inner ring piece 1614, a plurality of first rolling elements 1615, and a plurality of second rolling elements 1616.

The first inner ring piece 1613 and the second inner ring piece 1614 are annular members. The first inner ring piece 1613 and the second inner ring piece 1614 are in contact with an outer circumferential surface of the output member 15. The second inner ring piece 1614 is located on a side closer to the third ring gear 62 than the first inner ring piece 1613 is. An end surface of the second inner ring piece 1614 is in contact with an end surface of the first inner ring piece 1613.

The first rolling elements 1615 are arranged in a first row. The first row is arranged between the first inner ring piece 1613 and the attachment 19. The first rolling elements 1615 are positioned by a cage to be aligned at regular intervals. The first rolling elements 1615 are in contact with an inner circumferential surface of the attachment 19 and an outer circumferential surface of the first inner ring piece 1613. In other words, the raceway surfaces of the first rolling elements 1615 are the inner circumferential surface of the attachment 19 and the outer circumferential surface of the first inner ring piece 1613.

The second rolling elements 1616 are arranged in a second row. The second row is arranged between the second inner ring piece 1614 and the attachment 19. The second rolling elements 1616 are positioned by a cage to be aligned at regular intervals. The second rolling elements 1616 are in contact with an inner circumferential surface of the attachment 19 and an outer circumferential surface of the second inner ring piece 1614. In other words, the raceway surfaces of the second rolling elements 1616 are the inner circumferential surface of the attachment 19 and the outer circumferential surface of the second inner ring piece 1614.

In the fourth modification, the first bearing 16D does not include an outer ring as described above, and thus the number of parts of the first bearing 16D can be reduced. Thus, the reduction gear (third reduction gear 6D) in the fourth modification can be configured to be light in weight.

### (Fifth Modification)

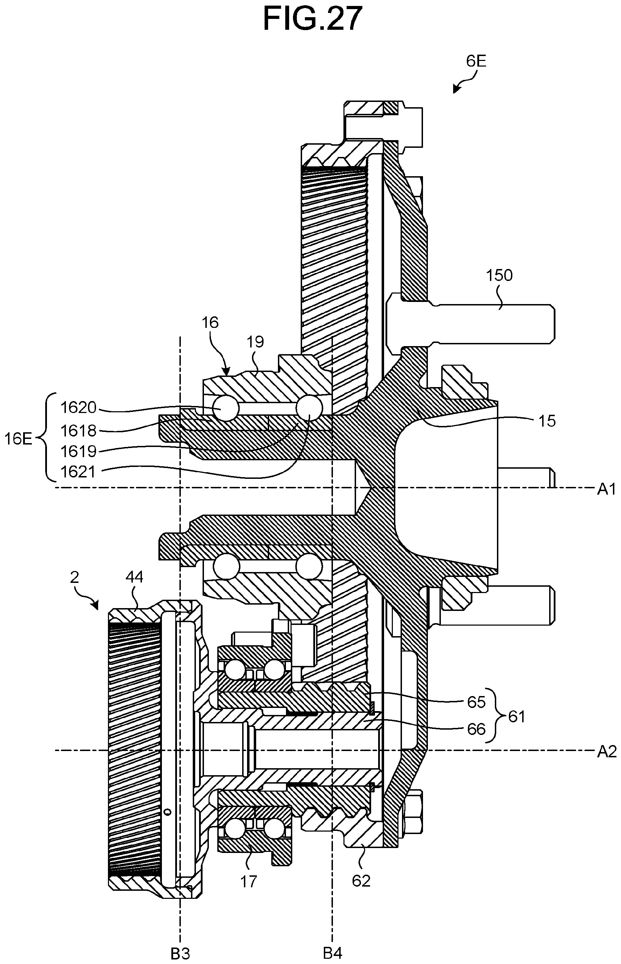

FIG. 27 is a cross-sectional view of a third reduction gear according to a fifth modification. The same reference numerals denote the same components as those described in the above-mentioned embodiment and overlapping description thereof is omitted.

As illustrated in FIG. 27, the third reduction gear 6E in the fifth modification includes a first bearing 16E. The first bearing 16E is mounted on the case 10 (FIG. 12 and FIG. 13) as a supporting member with the attachment 19 interposed therebetween. The first bearing 16E includes a first inner ring piece 1618, a second inner ring piece 1619, a plurality of first rolling elements 1620, and a plurality of second rolling elements 1621.

The first inner ring piece 1618 and the second inner ring piece 1619 are annular members. The first inner ring piece 1618 and the second inner ring piece 1619 are in contact with an outer circumferential surface of the output member 15. The second inner ring piece 1619 is located on a side closer to the third ring gear 62 than the first inner ring piece 1618 is. One end surface of the second inner ring piece 1619 is in contact with an end surface of the first inner ring piece 1618. The other end surface of the second inner ring piece 1619 is in contact with the output member 15. One end surface of the first inner ring piece 1618 is in contact with the output member 15. The first inner ring piece 1618 is positioned by swaging (plastically deforming) the output member 15.

The first rolling elements 1620 are arranged in a first row. The first row is arranged between the first inner ring piece 1618 and the attachment 19. The first rolling elements 1620 are positioned by a cage to be aligned at regular intervals. The first rolling elements 1620 are in contact with an inner circumferential surface of the attachment 19 and an outer circumferential surface of the first inner ring piece 1618. In other words, the raceway surfaces of the first rolling elements 1620 are the inner circumferential surface of the attachment 19 and the outer circumferential surface of the first inner ring piece 1618.

The second rolling elements 1621 are arranged in a second row. The second row is arranged between the second inner ring piece 1619 and the attachment 19. The second rolling elements 1621 are positioned by a cage to be aligned at regular intervals. The second rolling elements 1621 are in contact with an inner circumferential surface of the attachment 19 and an outer circumferential surface of the second inner ring piece 1619. In other words, the raceway surfaces of the second rolling elements 1621 are the inner circumferential surface of the attachment 19 and the outer circumferential surface of the second inner ring piece 1619.

In the fifth modification, the first bearing 16E does not include an outer ring as described above, and thus the number of parts of the first bearing 16E can be reduced. Thus, the reduction gear (third reduction gear 6E) in the fifth modification can be configured to be light in weight.

### (Sixth Modification)

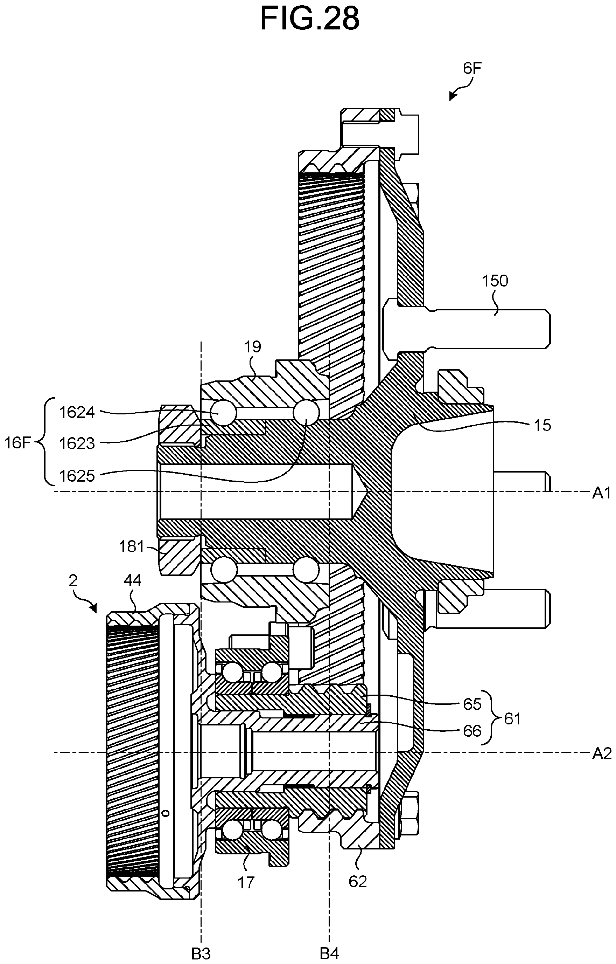

FIG. 28 is a cross-sectional view of a third reduction gear according to a sixth modification. The same reference numerals denote the same components as those described in the above-mentioned embodiment and overlapping description thereof is omitted.

As illustrated in FIG. 28, the third reduction gear 6F in the sixth modification includes a first bearing 16F. The first bearing 16F is mounted on the case 10 (FIG. 12 and FIG. 13) as a supporting member with the attachment 19 interposed therebetween. The first bearing 16F includes a first inner ring piece 1623, a plurality of first rolling elements 1624, and a plurality of second rolling elements 1625.

The first inner ring piece 1623 is an annular member. The first inner ring piece 1623 is in contact with an outer circumferential surface of the output member 15. One end surface of the first inner ring piece 1623 is in contact with the output member 15.

The first rolling elements 1624 are arranged in a first row. The first row is arranged between the first inner ring piece 1623 and the attachment 19. The first rolling elements 1624 are positioned by a cage to be aligned at regular intervals. The first rolling elements 1624 are in contact with an inner circumferential surface of the attachment 19 and an outer circumferential surface of the first inner ring piece 1623. In other words, the raceway surfaces of the first rolling elements 1624 are the inner circumferential surface of the attachment 19 and the outer circumferential surface of the first inner ring piece 1623.

The second rolling elements 1625 are arranged in a second row. The second row is arranged between the output member 15 and the attachment 19. The second rolling elements 1625 are positioned by a cage to be aligned at regular intervals. The second rolling elements 1625 are in contact with an inner circumferential surface of the attachment 19 and an outer circumferential surface of the output member 15. In other words, the raceway surfaces of the second rolling elements 1625 are the inner circumferential surface of the attachment 19 and the outer circumferential surface of the output member 15.

In the sixth modification, the first bearing 16F does not include an outer ring as described above, and thus the number of parts of the first bearing 16F can be reduced. Thus, the reduction gear (third reduction gear 6F) in the sixth modification can be configured to be light in weight.

### (Seventh Modification)

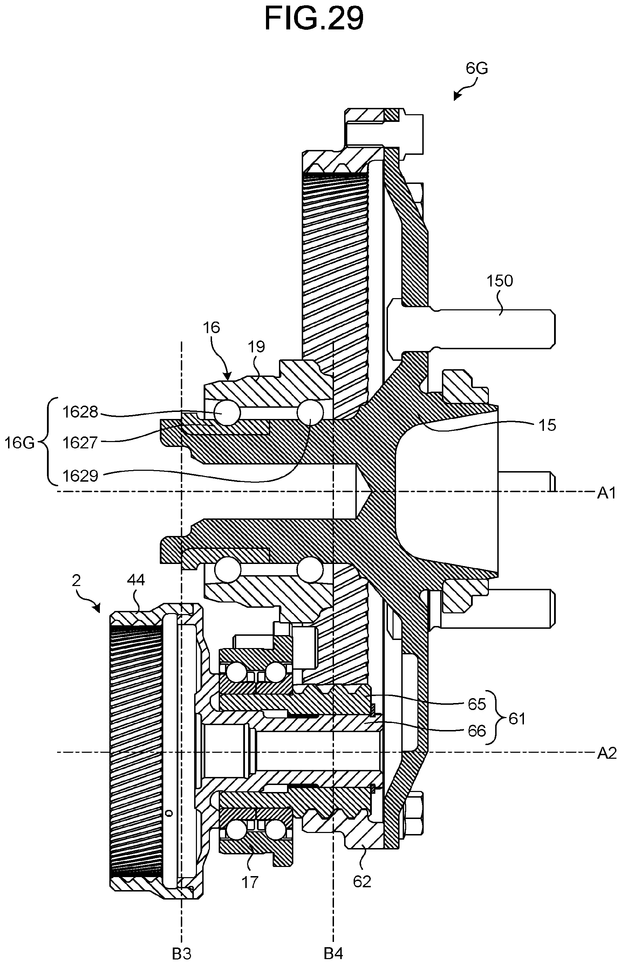

FIG. 29 is a cross-sectional view of a third reduction gear according to a seventh modification. The same reference numerals denote the same components as those described in the above-mentioned embodiment and overlapping description thereof is omitted.

As illustrated in FIG. 29, the third reduction gear 6G in the seventh modification includes a first bearing 16G. The first bearing 16G is mounted on the case 10 (FIG. 12 and FIG. 13) as a supporting member with the attachment 19 interposed therebetween. The first bearing 16G includes a first inner ring piece 1627, a plurality of first rolling elements 1628, and a plurality of second rolling elements 1629.

The first inner ring piece 1627 is an annular member. The first inner ring piece 1627 is in contact with an outer circumferential surface of the output member 15. One end surface and the other end surface of the first inner ring piece 1627 are in contact with the output member 15. The first inner ring piece 1627 is positioned by swaging (plastically deforming) the output member 15.

The first rolling elements 1628 are arranged in a first row. The first row is arranged between the first inner ring piece 1627 and the attachment 19. The first rolling elements 1628 are positioned by a cage to be aligned at regular intervals. The first rolling elements 1628 are in contact with an inner circumferential surface of the attachment 19 and an outer circumferential surface of the first inner ring piece 1627. In other words, the raceway surfaces of the first rolling elements 1628 are the inner circumferential surface of the attachment 19 and the outer circumferential surface of the first inner ring piece 1627.

The second rolling elements 1629 are arranged in a second row. The second row is arranged between the output member 15 and the attachment 19. The second rolling elements 1629 are positioned by a cage to be aligned at regular intervals. The second rolling elements 1629 are in contact with an inner circumferential surface of the attachment 19 and an outer circumferential surface of the output member 15. In other words, the raceway surfaces of the second rolling elements 1629 are the inner circumferential surface of the attachment 19 and the outer circumferential surface of the output member 15.

In the seventh modification, the first bearing 16G does not include an outer ring as described above, and thus the number of parts of the first bearing 16G can be reduced. Thus, the reduction gear (third reduction gear 6G) in the seventh modification can be configured to be light in weight.

### Reference Signs List

- 1, 1A: ELECTRIC VEHICLE DRIVING DEVICE
- 10, 10A: CASE (SUPPORTING MEMBER)
- 100: WHEEL
- 11: FIRST MOTOR
- 110: FIRST SHAFT
- 111: FIRST MOTOR GEAR
- 115: FIRST ROTOR
- 116: FIRST STATOR
- 117: FIRST COIL
- 12: SECOND MOTOR
- 120: SECOND SHAFT
- 121: SECOND MOTOR GEAR
- 125: SECOND ROTOR
- 126: SECOND STATOR
- 127: SECOND COIL
- 13: FIRST REDUCTION GEAR
- 131: FIRST GEAR
- 132: SECOND GEAR
- 133: THIRD GEAR
- 14: SECOND REDUCTION GEAR
- 141: FIRST GEAR
- 142: SECOND GEAR
- 143: THIRD GEAR
- 15: OUTPUT MEMBER
- 150: STUD BOLT
- 16, 16B, 16C, 16D, 16E, 16F, 16G: FIRST BEARING
- 16a: INNER BEARING
- 16b: OUTER BEARING
- 1601: FIRST INNER RING PIECE
- 1602: SECOND INNER RING PIECE
- 1603: SPACER
- 1604: FIRST ROLLING ELEMENT
- 1605: SECOND ROLLING ELEMENT
- 1607: OUTER RING
- 1608: FIRST INNER RING PIECE
- 1609: SECOND INNER RING PIECE
- 1610: FIRST ROLLING ELEMENT
- 1611: SECOND ROLLING ELEMENT
- 1613: FIRST INNER RING PIECE
- 1614: SECOND INNER RING PIECE
- 1615: FIRST ROLLING ELEMENT
- 1616: SECOND ROLLING ELEMENT
- 1618: FIRST INNER RING PIECE
- 1619: SECOND INNER RING PIECE
- 1620: FIRST ROLLING ELEMENT
- 1621: SECOND ROLLING ELEMENT
- 1623: FIRST INNER RING PIECE
- 1624: FIRST ROLLING ELEMENT
- 1625: SECOND ROLLING ELEMENT
- 1627: FIRST INNER RING PIECE
- 1628: FIRST ROLLING ELEMENT
- 1629: SECOND ROLLING ELEMENT
- 17: SECOND BEARING
- 171: OUTER RING
- 171f: FLANGE
- 172: ROLLING ELEMENT
- 173: INNER RING
- 173a: FIRST INNER RING PIECE
- 173b: SECOND INNER RING PIECE
- 176, 177: CAGE
- 19: ATTACHMENT
- 19f: FLANGE
- 2: TRANSMISSION DEVICE
- 20: INPUT GEAR
- 21: SUN GEAR SHAFT
- 25: TRANSMISSION DEVICE OUTPUT SHAFT
- 3: FIRST PLANETARY GEAR DEVICE
- 31: FIRST SUN GEAR
- 32: FIRST PINION GEAR
- 33: FIRST CARRIER
- 34: FIRST RING GEAR
- 4: SECOND PLANETARY GEAR DEVICE
- 41: SECOND SUN GEAR
- 421: SECOND PINION GEAR
- 422: THIRD PINION GEAR
- 43: SECOND CARRIER
- 44: SECOND RING GEAR
- 5: CLUTCH
- 51: INNER RACE
- 52: OUTER RACE
- 53: ROLLER
- 6, 6B, 6C, 6D, 6E, 6F, 6G: THIRD REDUCTION GEAR (REDUCTION GEAR)
- 6A: REDUCTION GEAR
- 61: FOURTH PINION GEAR (PINION GEAR)
- 61A: PINION GEAR
- 62: THIRD RING GEAR (INTERNAL GEAR)
- 65: OUTER SHAFT
- 651: SMALL-DIAMETER PORTION
- 651p: BEARING FITTING SURFACE
- 651q: SECOND FITTING SURFACE
- 653: LARGE-DIAMETER PORTION
- 653s: GROOVE
- 653t: TOOTH
- 66: INNER SHAFT
- 661: BASE PORTION
- 661q: FIRST FITTING SURFACE
- 663: TORQUE TRANSMITTING PORTION
- 663s: PROJECTION
- 665: COUPLING PORTION
- 67: SNAP RING
- 7: MOTOR
- 70: SHAFT
- 75: ROTOR
- 76: STATOR
- 77: COIL
- 8: CONNECTOR
- 9: CONTROL DEVICE
- A1, A11, A12, A2, A131, A132, A141, A142: ROTATION AXIS
- B1: FIRST PLANE
- B2: SECOND PLANE
- B3: THIRD PLANE
- B4: FOURTH PLANE
- E1: FIRST END PORTION
- E2: SECOND END PORTION
- H1: FIRST HALF LINE
- H2: SECOND HALF LINE
- L1: STRAIGHT LINE
- R1, R2: REGION

## Claims

1. A reduction gear comprising:
a first bearing (16,16B,16C,16D,16E,16F,16G) that is mounted on a supporting member (10, 10A);
an output member (15) that is supported by the first bearing (16,16B,16C,16D,16E,16F,16G) and rotates about a first rotation axis (Al);
an internal gear (62) that is coupled to the output member (15) and rotates about the first rotation axis (A1) together with the output member (15);
a second bearing (17) that is mounted on the supporting member (10,10A) on an outer side relative to the first bearing (16,16B,16C,16D,16E,16F,16G) in a radial direction; and
a pinion gear (61) that is supported by the second bearing (17), rotates about a second rotation axis (A2) different from the first rotation axis (Al), and is engaged with the internal gear (62), wherein
at least a part of the second bearing (17) is located on a side closer to the internal gear (62) with respect to a plane passing through an end portion of the first bearing (16,16B,16C,16D,16E,16F,16G) that is more distant from the internal gear (62) in an axial direction parallel to the second rotation axis (A2) and being orthogonal to the second rotation axis (A2),
**characterized in that**
the pinion gear (61) includes a tubular outer shaft (65) and an inner shaft (66) at least a part of which is located on an inner side of the outer shaft (65) and that rotates together with the outer shaft (65),
the outer shaft (65) has a small-diameter portion (651) that is in contact with an inner circumferential surface of an inner ring of the second bearing (17) and a large-diameter portion (653) that is engaged with the internal gear (62),
the maximum outer diameter of the large-diameter portion (653) is larger than the bore diameter of the inner ring, an end surface of large-diameter portion (653) is in contact with the second bearing (17), the inner shaft (66) has a base portion (661) located on an inner side of the small-diameter portion (651) and a torque transmitting portion (663) located on an inner side of the large-diameter portion (653),
the base portion (661) has a first fitting surface (661q) that is a cylindrical outer circumferential surface,
the small-diameter portion (651) has a second fitting surface that is a cylindrical inner circumferential surface and is in contact with the first fitting surface (661q),
one of an outer circumferential surface of the torque transmitting portion (663) and an inner circumferential surface of the large-diameter portion (653) has a groove that extends in the axial direction, and
the other of the outer circumferential surface of the torque transmitting portion (663) and the inner circumferential surface of the large-diameter portion (653) has a projection that extends in the axial direction and fits into the groove.

2. The reduction gear according to claim 1, wherein the second bearing (17) is a double-row angular ball bearing.

3. The reduction gear according to any one of claims 1 to 2, wherein the second rotation axis (A2) is located on an inner side of the internal gear (62) in a radial direction.

4. The reduction gear according to any one of claims 1 to 3, wherein
the first bearing (16,16B,16C,16D,16E,16F,16G) is mounted on the supporting member (10,10A) with an attachment (19) interposed therebetween,
the first bearing (16,16B,16C,16D,16E,16F,16G) includes a plurality of first rolling elements (1604) that are arranged in a first row and a plurality of second rolling elements (1605) that are arranged in a second row, and
inner circumferential surfaces of the attachment (19) are in contact with the first rolling elements (1604) and the second rolling elements (1605).

## Patentansprüche

1. Untersetzungsgetriebe, umfassend:
ein erstes Lager (16, 16B, 16C, 16D, 16E, 16F, 16G), das an einem Stützelement (10, 10A) angebracht ist;
ein Ausgangselement (15), das von dem ersten Lager (16, 16B, 16C, 16D, 16E, 16F, 16G) getragen wird und sich um eine erste Drehachse (A1) dreht;
ein Innenzahnrad (62), das mit dem Ausgangselement (15) gekoppelt ist und sich zusammen mit dem Ausgangselement (15) um die erste Drehachse (A1) dreht;
ein zweites Lager (17), das an einer Außenseite relativ zum ersten Lager (16, 16B, 16C, 16D, 16E, 16F, 16G) in radialer Richtung am Tragelement (10, 10A) angebracht ist; und
ein Ritzel (61), das von dem zweiten Lager (17) getragen wird, sich um eine zweite Drehachse (A2) dreht, die sich von der ersten Drehachse (A1) unterscheidet, und mit dem Innenzahnrad (62) in Eingriff steht, wobei
zumindest ein Teil des zweiten Lagers (17) auf einer Seite angeordnet ist, die näher an dem Innenzahnrad (62) liegt in Bezug auf eine Ebene, die durch einen Endabschnitt des ersten Lagers (16, 16B, 16C, 16D, 16E, 16F, 16G) verläuft, der in einer axialen Richtung parallel zu der zweiten Drehachse (A2) und orthogonal zu der zweiten Drehachse (A2) weiter von dem Innenzahnrad (62) entfernt ist,
**dadurch gekennzeichnet, dass**
das Ritzel (61) eine rohrförmige äußere Welle (65) und eine innere Welle (66) umfasst, von der sich zumindest ein Teil auf einer Innenseite der äußeren Welle (65) befindet und die sich zusammen mit der äußeren Welle (65) dreht,
die äußere Welle (65) einen Abschnitt (651) mit kleinem Durchmesser hat, der mit einer inneren Umfangsfläche eines Innenrings des zweiten Lagers (17) in Kontakt ist, und einen Abschnitt (653) mit großem Durchmesser, der mit dem Innenzahnrad (62) in Eingriff ist,
der maximale Außendurchmesser des Teils mit großem Durchmesser (653) ist größer als der Bohrungsdurchmesser des Innenrings,
eine Endfläche des Abschnitts (653) mit großem Durchmesser in Kontakt mit dem zweiten Lager (17) ist,
die innere Welle (66) einen Basisabschnitt (661), der sich auf einer Innenseite des Abschnitts mit kleinem Durchmesser (651) befindet, und einen Drehmomentübertragungsabschnitt (663), der sich auf einer Innenseite des Abschnitts mit großem Durchmesser (653) befindet, aufweist,
der Basisabschnitt (661) eine erste Passfläche (661q) aufweist, die eine zylindrische Außenumfangsfläche ist,
der Abschnitt (651) mit kleinem Durchmesser eine zweite Passfläche aufweist, die eine zylindrische Innenumfangsfläche ist und in Kontakt mit der ersten Passfläche (661q) steht,
eine äußere Umfangsfläche des drehmomentübertragenden Abschnitts (663) oder eine innere Umfangsfläche des Abschnitts (653) mit großem Durchmesser eine Nut aufweist, die sich in der axialen Richtung erstreckt, und
die andere der äußeren Umfangsfläche des drehmomentübertragenden Teils (663) und der inneren Umfangsfläche des Teils mit großem Durchmesser (653) einen Vorsprung aufweist, der sich in axialer Richtung erstreckt und in die Nut passt.

2. Untersetzungsgetriebe nach Anspruch 1, wobei das zweite Lager (17) ein zweireihiges Schrägkugellager ist.

3. Untersetzungsgetriebe nach einem der Ansprüche 1 bis 2, wobei die zweite Drehachse (A2) auf einer Innenseite des Innenzahnrads (62) in radialer Richtung angeordnet ist.

4. Untersetzungsgetriebe nach einem der Ansprüche 1 bis 3, wobei
das erste Lager (16, 16B, 16C, 16D, 16E, 16F, 16G) auf dem Stützelement (10, 10A) mit einer dazwischen angeordneten Befestigung (19) montiert ist,
das erste Lager (16, 16B, 16C, 16D, 16E, 16F, 16G) eine Mehrzahl von ersten Wälzkörpern (1604), die in einer ersten Reihe angeordnet sind, und eine Mehrzahl von zweiten Wälzkörpern (1605), die in einer zweiten Reihe angeordnet sind, aufweist, und
die inneren Umfangsflächen des Aufsatzes (19) mit den ersten Wälzkörpern (1604) und den zweiten Wälzkörpern (1605) in Kontakt sind.

## Revendications

1. Réducteur comprenant :
un premier palier (16, 16B, 16C, 16D, 16E, 16F, 16G) qui est monté sur un élément de support (10, 10A) ;
un élément de sortie (15) qui est supporté par le premier palier (16, 16B, 16C, 16D, 16E, 16F, 16G) et tourne autour d'un premier axe de rotation (A1) ;
un engrenage intérieur (62) qui est couplé à l'élément de sortie (15) et tourne autour du premier axe de rotation (A1) avec l'élément de sortie (15) ;
un deuxième palier (17) qui est monté sur l'élément de support (10, 10A) sur un côté extérieur par rapport au premier palier (16, 16B, 16C, 16D, 16E, 16F, 16G) dans une direction radiale ; et
un pignon (61) qui est supporté par le deuxième palier (17), tourne autour d'un deuxième axe de rotation (A2) différent du premier axe de rotation (A1), et est en prise avec l'engrenage intérieur (62), dans lequel
au moins une partie du deuxième palier (17) est située sur un côté plus proche de l'engrenage intérieur (62) par rapport à un plan passant par une partie d'extrémité du premier palier (16, 16B, 16C, 16D, 16E, 16F, 16G) qui est plus éloignée de l'engrenage intérieur (62) dans une direction axiale parallèle au deuxième axe de rotation (A2) et étant orthogonale au deuxième axe de rotation (A2),
**caractérisé en ce que**
le pignon (61) comprend un arbre extérieur (65) et un arbre intérieur (66) dont au moins une partie est située sur un côté intérieur de l'arbre extérieur (65) et qui tourne avec l'arbre extérieur (65),
l'arbre extérieur (65) a une partie de petit diamètre (651) qui est en contact avec une surface circonférentielle intérieure d'une bague intérieure du deuxième palier (17) et une partie de grand diamètre (653) qui est en prise avec l'engrenage intérieur (62),
le diamètre extérieur maximal de la partie de grand diamètre (653) est supérieur au diamètre d'alésage de la bague intérieure,
une surface d'extrémité de la partie de grand diamètre (653) est en contact avec le deuxième palier (17),
l'arbre intérieur (66) a une partie de base (661) située sur un côté intérieur de la partie de petit diamètre (651) et une partie de transmission de couple (663) située sur un côté intérieur de la partie de grand diamètre (653),
la partie de base (661) a une première surface d'ajustement (661q) qui est une surface circonférentielle extérieure cylindrique,
la partie de petit diamètre (651) a une deuxième surface d'ajustement qui est une surface circonférentielle intérieure cylindrique et est en contact avec la première surface d'ajustement (661q),
l'une d'une surface circonférentielle extérieure de la partie de transmission de couple (663) et d'une surface circonférentielle intérieure de la partie de grand diamètre (653) a une rainure qui s'étend dans la direction axiale, et
l'autre de la surface circonférentielle extérieure de la partie de transmission de couple (663) et de la surface circonférentielle intérieure de la partie de grand diamètre (653) ont une saillie qui s'étend dans la direction axiale et s'adapte dans la rainure.

2. Réducteur selon la revendication 1, dans lequel le deuxième palier (17) est un palier à billes angulaire à double rangée.

3. Réducteur selon l'une quelconque des revendications 1 à 2, dans lequel le deuxième axe de rotation (A2) est situé sur un côté intérieur du pignon intérieur (62) dans une direction radiale.

4. Réducteur selon l'une quelconque des revendications 1 à 3, dans lequel
le premier palier (16, 16B, 16C, 16D, 16E, 16F, 16G) est monté sur l'élément de support (10, 10A) avec une fixation (19) intercalés entre eux,
le premier palier (16, 16B, 16C, 16D, 16E, 16F, 16G) comprend une pluralité de premiers éléments roulants (1604) qui sont disposés dans une première rangée et une pluralité de deuxièmes éléments roulants (1605) qui sont disposés dans une deuxième rangée, et
les surfaces circonférentielles intérieures de la fixation (19) sont en contact avec les premiers éléments roulants (1604) et les deuxièmes éléments roulants (1605).
